# EUROPÄISCHE PATENTANMELDUNG

(11) **EP 4 302 920 A1**
(43) Veröffentlichungstag der Anmeldung: **10.01.2024**
(21) Anmeldenummer: 23181041.7
(22) Anmeldetag: 22.06.2023
(51) Int. Cl.: B23P 19/04, B60J 10/00

(54) **MODULARE APPLIKATIONSVORRICHTUNG UND MODULARER BAUKASTEN ZUM AUFBAU EINER APPLIKATIONSVORRICHTUNG**

(30) Priorität: 24.06.2022 DE 102022206369
(71) Anmelder: thyssenkrupp Automotive Body Solutions GmbH, 74076 Heilbronn (DE); thyssenkrupp AG, 45143 Essen (DE)
(72) Erfinder: Siebenborn, Christoph, 66679 Losheim am See (DE); Kaub, Tim, 54411 Hermeskeil (DE); Paulus, Bernd, 66620 Nonnweiler (DE)
(74) Vertreter: thyssenkrupp Intellectual Property GmbH

(57) **Zusammenfassung**

Die vorliegende Erfindung betrifft eine Applikationsvorrichtung (1) zum Applizieren eines Dichtungsprofils (200) auf einem Karosseriebauteil, umfassend einen Anrollkopf (2), der zum Aufbringen des Dichtungsprofils (200) auf eine Aufnahmefläche des Karosseriebauteils ausgebildet ist, und wenigstens eine weitere Funktionseinheit (15) zur Ausführung eines weiteren Stationsschritts, wobei die wenigstens eine weitere Funktionseinheit (15) jeweils als ein Funktionsmodul aus einer Menge von Funktionsmodulen ausgebildet ist. Die Applikationsvorrichtung (1) weist einen Grundkörper (10) auf, wobei der Grundkörper (10) den Anrollkopf (2) und eine Mehrzahl von vorbestimmten Anordnungspositionen (1131, 1132, 114, 115, 116, 117, 118, 119) aufweist, wobei einer konkreten Anordnungsposition aus der Mehrzahl der vorbestimmten Anordnungspositionen (1131, 1132, 114, 115, 116, 117, 118, 119) jeweils einem Funktionsmodul aus der Menge von Funktionsmodulen zur Anordnung an dem Grundkörper (10) zugeordnet ist, und jedes Funktionsmodul der Applikationsvorrichtung (1) an der dem jeweiligen Funktionsmodul zugeordneten Anordnungsposition angeordnet ist.

Ferner betrifft die Erfindung einen modularen Baukasten für den Aufbau einer Applikationsvorrichtung (1).

## Beschreibung

Die Erfindung betrifft eine Applikationsvorrichtung zum Applizieren eines Dichtungsprofils auf einem Karosseriebauteil, wobei die Applikationsvorrichtung einen Anrollkopf, der zum Aufbringen des Dichtungsprofils auf eine Aufnahmefläche des Karosseriebauteils als einen Stationsschritt ausgebildet ist, und wenigstens eine weitere Funktionseinheit umfasst, die jeweils zur Ausführung eines weiteren im Zusammenhang mit dem Dichtungsprofil und/oder dem Applizieren des Dichtungsprofils stehenden Stationsschritts ausgebildet ist. Des Weiteren betrifft die Erfindung einen modularen Baukasten zum Aufbau einer Applikationsvorrichtung.

Dichtungsprofile werden beispielsweise auf einem dem Verschließen einer Karosserieöffnung dienenden Karosseriebauteil appliziert, insbesondere um eine dichtende Verbindung zwischen einer Karosserieöffnung und einer in die Öffnung eingesetzten Abdeckung herzustellen. Bei so einer Abdeckung kann es sich beispielsweise um eine Tür, einen Kofferraumdeckel oder ein Schiebedachelement handeln.

Aus der DE 10 2017 221 018 B3 ist eine Applikationsvorrichtung zum Applizieren eines Dichtungsprofils auf ein Karosseriebauteil bekannt, wobei die Applikationsvorrichtung eine Reinigungsvorrichtung umfasst. Dabei wird ein Oberflächenbereich des Karosseriebauteils als Fügestelle zum Aufbringen des Dichtungsprofils festgelegt, der auch Aufnahmefläche genannt wird. Dieser Oberflächenbereich wird dann vor dem Applizieren des Dichtungsprofils mechanisch gereinigt, um Staub zu binden und Schmiermittelrückstände von dem Karosseriebauteil abzutragen und aufzunehmen. Ein angeklebtes Dichtungsprofil hält auf dem Oberflächenbereich dabei zuverlässiger, wenn dieser gereinigt wurde, als wenn auf eine Reinigung verzichtet wird. Eine solche Applikationsvorrichtung bildet dabei eine Fertigungsstation.

Des Weiteren ist es bekannt, dass das Dichtungsprofil Löcher aufweisen kann, durch die beispielsweise Schwitzwasser, das sich unter dem Dichtungsprofil angesammelt hat, austreten kann. Das Einbringen solcher Löcher in das Dichtungsprofil erfolgt dabei in einer separaten Fertigungsstation, die in der Regel räumlich vollständig von der Applikationsvorrichtung getrennt ist, um das Dichtungsprofil mit den eingebrachten Löchern dann in der Applikationsvorrichtung verwenden zu können.

Ausgehend hiervon ist es eine Aufgabe der vorliegenden Erfindung, eine verbesserte Applikationsvorrichtung bereitzustellen, die es insbesondere erlaubt, im Zusammenhang mit dem Dichtungsprofil und/oder dem Applizieren des Dichtungsprofils stehende Verfahrensschritte mit geringerem zeitlichen Aufwand und vorteilhafterweise bei verringertem Platzbedarf durchzuführen. Vorteilhafterweise soll die Applikationsvorrichtung zudem unterschiedliche Anforderungen kostengünstig bereitstellen können.

Zur Lösung dieser Aufgabe werden eine Applikationsvorrichtung sowie ein modularer Baukasten für den Aufbau einer Applikationsvorrichtung gemäß den unabhängigen Ansprüchen vorgeschlagen. Weitere vorteilhafte Ausgestaltungen der Erfindung sind in den abhängigen Ansprüchen und der Beschreibung beschrieben sowie in den Figuren dargestellt.

Die vorgeschlagene Lösung sieht eine Applikationsvorrichtung zum Applizieren eines Dichtungsprofils auf einem Karosseriebauteil vor, insbesondere einem dem Verschließen einer Karosserieöffnung dienenden Karosseriebauteil. Die Applikationsvorrichtung umfasst einen Anrollkopf, der zum Aufbringen des Dichtungsprofils auf eine Aufnahmefläche des Karosseriebauteils als einen ersten Stationsschritt ausgebildet ist, und wenigstens eine weitere Funktionseinheit, die jeweils zur Ausführung eines weiteren Stationsschritts ausgebildet ist, der im Zusammenhang mit dem Dichtungsprofil und/oder dem Applizieren des Dichtungsprofils steht. Die wenigstens eine weitere Funktionseinheit ist dabei jeweils als ein Funktionsmodul aus einer Menge von Funktionsmodulen ausgebildet, wobei die Menge insbesondere auch genau eine Funktionseinheit umfassen kann. Erfindungsgemäß ist darüber hinaus vorgesehen, dass die Applikationsvorrichtung einen Grundkörper aufweist, wobei der Grundkörper den Anrollkopf und eine Mehrzahl von vorbestimmten Anordnungspositionen aufweist. Einer konkreten Anordnungsposition aus der Mehrzahl der vorbestimmten Anordnungspositionen ist dabei jeweils ein Funktionsmodul aus der Menge von Funktionsmodulen zur Anordnung an dem Grundkörper zugeordnet, wobei jedes Funktionsmodul der Applikationsvorrichtung an der dem jeweiligen Funktionsmodul zugeordneten Anordnungsposition angeordnet ist. Der Grundkörper umfasst insofern vorteilhafterweise stets die gleiche Anzahl von Anordnungspositionen, insbesondere unabhängig davon, wie viele Funktionsmodule letztlich an dem Grundkörper angeordnet werden. Somit sind vorteilhafterweise unterschiedlichste Ausgestaltungsvarianten der Applikationsvorrichtung insbesondere unter Nutzung des gleichen Grundkörpers realisierbar. An welcher Stelle des Grundkörpers eine jeweilige Funktionseinheit angeordnet wird, ist dabei vorteilhafterweise durch die Anordnung der Anordnungspositionen an dem Grundkörper vorgegeben. Insbesondere kann eine Funktionseinheit auch mehrere Funktionskomponenten umfassen, die dann insbesondere an diesen Funktionskomponenten konkret zugeordneten Anordnungspositionen angeordnet sind. Die Summe dieser Anordnungspositionen ist dann insbesondere die der Funktionseinheit zugeordnete Anordnungsposition.

Da die beschriebenen Funktionseinheiten der erfindungsgemäß ausgebildeten Applikationsvorrichtung als Funktionsmodule ausgebildet sind, werden die Begriffe Funktionseinheit und Funktionsmodul in der nachfolgenden Beschreibung auch austauschbar verwendet.

Die jeweilige Anordnungsposition an dem Grundkörper der Applikationsvorrichtung legt vorteilhafterweise auch die Reihenfolge fest, in der ein Arbeitsschritt beziehungsweise ein Stationsschritt von dem jeweiligen Funktionsmodul durchgeführt wird, insbesondere in Bezug zu dem Aufbringen des Dichtungsprofils durchgeführt wird. Insbesondere sind die Anordnungspositionen für die diesen Anordnungspositionen zugeordneten Funktionsmodule derart vorbestimmt, dass eine Bearbeitungsreihenfolge des jeweiligen weiteren Stationsschritts, der durch das jeweilige zugeordnete Funktionsmodul ausgeführt werden kann, in Bezug auf den ersten Stationsschritt festgelegt ist. In diesem Zusammenhang wird darauf hingewiesen, dass die Bezeichnung "erster Stationsschritt" nur der Unterscheidung von den weiteren Stationsschritten dient und keine Reihenfolge festlegt. Insbesondere muss der "erste Stationsschritt" nicht der zuerst durchgeführte Stationsschritt sein.

Gemäß einer vorteilhaften Ausgestaltung der Applikationsvorrichtung weist der Grundkörper zudem für dasselbe Funktionsmodul mehrere Anordnungspositionen auf, insbesondere zwei oder drei Anordnungspositionen, wobei vorteilhafterweise abhängig davon, an welcher Anordnungsposition das Funktionsmodul angeordnet wird, auch festgelegt wird, ob das Funktionsmodul den zugehörigen Stationsschritt vor oder während oder nach dem Aufbringen des Dichtungsprofils durchgeführt wird.

Da sich basierend auf dem gleichen Grundkörper somit vorteilhafterweise unterschiedliche Applikationsvorrichtungen aufbauen lassen, insbesondere hinsichtlich des Funktionsumfangs und/oder hinsichtlich des Ausführens von Stationsschritten unterschiedliche Applikationsvorrichtungen, kann die Applikationsvorrichtung zudem unterschiedliche Anforderungen kostengünstig bereitstellen. Insbesondere ist die Applikationsvorrichtung dabei einer einzigen Fertigungsstation zugeordnet. Die Applikationsvorrichtung nimmt insofern vorteilhafterweise auch nur den benötigten Raum für eine einzige Fertigungsstation ein. Die Applikationsvorrichtung umfasst insofern insbesondere nicht mehrere Fertigungsstationen, die lediglich baulich miteinander verbunden sind, wobei das Aufbringen des Dichtungsprofils der einen Fertigungsstation zugeordnet ist und die weitere Funktion der weiteren Fertigungsstation zugeordnet ist.

Der Grundkörper der Applikationsvorrichtung ist insbesondere zumindest teilweise aus einem metallischen Material, weiter insbesondere vollständig aus einem metallischen Material. Insbesondere sind Aluminium und/oder Stahl als Material vorgesehen. Es sind aber insbesondere auch andere Werkstoffe, aus denen der Grundkörper bestehen kann, denkbar. Der Grundkörper kann insbesondere einstückig oder mehrstückig ausgebildet sein.

Gemäß einer weiteren vorteilhaften Ausgestaltung umfasst die Applikationsvorrichtung eine Bohreinheit als weitere Funktionseinheit, wobei die Bohreinheit vorteilhafterweise ausgebildet ist, Löcher in das Dichtungsprofil zu bohren. Vorteilhafterweise kann somit bei einer derart ausgestalteten Applikationsvorrichtung ein Dichtungsprofil ohne zuvor eingebrachte Löcher verwendet werden. Es entfällt somit vorteilhafterweise ein Prozessschritt, für den üblicherweise eine zusätzliche Bearbeitungsstation vorgesehen ist. Auch diese zusätzliche Bearbeitungsstation, die üblicherweise auch einen eigenen Roboter erfordert, sowie der für diese zusätzliche Bearbeitungsstation erforderliche Raumbedarf entfallen somit vorteilhafterweise. Die Bohreinheit umfasst insbesondere einen Bohrer sowie eine Antriebseinheit, um den Bohrer in Rotation zu versetzen. Vorteilhafterweise umfasst die Bohreinheit darüber hinaus wenigstens eine Sensoreinheit, die ausgebildet ist, einen Bohrvorgang zu überwachen. Weiter vorteilhaft umfasst die Bohreinheit eine Absaugeinheit, insbesondere eine Absaugglocke, die vorteilhafterweise ausgebildet ist, insbesondere beim Bohren des Dichtungsprofils entstehende Späne abzusaugen. Weiter vorteilhaft ist die Bohreinheit derart ausgebildet, dass der Bohrer der Bohreinheit unterschiedliche Anstellwinkel, mit denen ein Bohrvorgang ausgeführt wird, aufweisen kann. Insbesondere ist die Bohreinheit und/oder der den Bohrer aufnehmende Bohrkopf entsprechend verstellbar ausgebildet. Für ein automatisches Verstellen umfasst die Bohreinheit vorteilhafterweise wenigstens eine Aktuatoreinheit, mit der die Bohreinheit und/oder der Bohrkopf relativ zu dem Grundkörper der Applikationsvorrichtung verstellt werden kann. Durch diese Verstellmöglichkeit der Bohrachse kann die Orientierung der Bohrlöcher vorteilhafterweise entsprechend einer vorgegebenen Spezifikation eingestellt werden.

Insbesondere ist der Applikationsvorrichtung eine Steuereinheit zugeordnet, insbesondere eine SPS (SPS: Speicherprogrammierbare Steuerung), wobei diese Steuereinheit insbesondere ausgebildet ist, die Bohreinheit zur Ausführung von Bohrvorgängen anzusteuern und insbesondere den Anrollkopf und die Bohreinheit koordiniert anzusteuern, vorteilhafterweise um ein Bohren und ein Applizieren gezielt aufeinander abgestimmt ausführen zu können. Insbesondere ist vorgesehen, dass mittels der Steuereinheit das Applizieren für die Dauer des Bohrens gestoppt wird. Während die Bohrungen an vorgegebenen Positionen durch Ansteuerung der Bohreinheit mittels der Steuereinheit durchgeführt werden, erfolgt also vorteilhafterweise kein Applizieren.

Eine vorteilhafte Ausgestaltungsvariante sieht daher vor, dass die Bohreinheit einer Anordnungsposition zugeordnet ist, die ein Bohren des Dichtungsprofils als weiteren Stationsschritt nach einem Applizieren des Dichtungsprofils festlegt. Diese Ausgestaltungsvariante ist insbesondere vorgesehen, wenn die Applikationsvorrichtung robotergeführt ist. Die Bohreinheit ist dabei vorteilhafterweise derart an dem Grundkörper angeordnet, dass der Bohrer nach außen weist und die Bohreinheit durch ein Verschwenken der Applikationsvorrichtung nach dem Aufbringen des Dichtungsprofils die Löcher in das Dichtungsprofil einbringen kann. Die Ausgestaltungsvariante kann aber insbesondere auch vorgesehen sein, wenn die Applikationsvorrichtung an einem stationären Träger fix angeordnet ist, wobei dann insbesondere das Bauteil entsprechend zu dem Bohrer verbracht wird, insbesondere mittels eines Roboterarms.

Eine weitere vorteilhafte Ausgestaltung sieht vor, dass die Bohreinheit einer Anordnungsposition zugeordnet ist, die ein Bohren des Dichtungsprofils als weiteren Stationsschritt während eines Applizierens des Dichtungsprofils festlegt. Vorteilhafterweise ermöglicht diese Ausgestaltung ein Einbringen von Löcher in das Dichtungsprofil ohne Taktzeitverlust. Ein Bohren des Dichtungsprofils während eines Applizierens des Dichtungsprofils meint dabei insbesondere nicht, dass in einen Abschnitt des Dichtungsprofils, der gerade auf ein Karosseriebauteil aufgebracht wird, die Löcher eingebracht werden. Stattdessen ist vorteilhafterweise vorgesehen, dass bei dieser Ausgestaltungsvariante das Bohren von Löchern in einen ersten Abschnitt des Dichtungsprofils und das Aufbringen eines zweiten Abschnitts des Dichtungsprofils zeitgleich erfolgen, wobei die Bohreinheit dem Anrollkopf insbesondere örtlich nachgelagert ist, sodass Löcher in den ersten Abschnitt des Dichtungsprofils gebohrt werden, der dann zeitlich später von dem Anrollkopf auf ein Karosseriebauteil aufgebracht wird.

Eine weitere vorteilhafte Ausgestaltung sieht vor, dass die Bohreinheit einer Anordnungsposition zugeordnet ist, die ein Bohren des Dichtungsprofils als weiteren Stationsschritt vor einem Applizieren des Dichtungsprofils festlegt. Dabei ist insbesondere vorgesehen, dass die Löcher in das Dichtungsprofil eingebracht werden, bevor das Dichtungsprofil einer Bevorratungseinheit zugeführt wird, von der aus das Dichtungsprofil für das Aufbringen des Dichtungsprofils bereitgestellt wird.

Gemäß einer weiteren vorteilhaften Ausgestaltung umfasst die Applikationsvorrichtung eine Reinigungseinheit als weitere Funktionseinheit, wobei die Reinigungseinheit insbesondere ausgebildet ist, eine Aufnahmefläche eines Karosseriebauteils zu reinigen, insbesondere die Aufnahmefläche, auf der nachfolgend das Dichtungsprofil aufgebracht werden soll. Durch die Reinigung sollen dabei insbesondere Rückstände, insbesondere Wachsrückstände, entfernt werden, die eine zuverlässige stoffschlüssige Anbindung des Dichtungsprofils an dem Karosseriebauteil verhindern könnten. Vorteilhafterweise entfällt durch die Reinigungseinheit eine separate Reinigungsstation samt zugehörigem Roboter und zugehöriger Stationsabgrenzung.

Insbesondere ist vorgesehen, dass die Reinigungseinheit einer Anordnungsposition zugeordnet ist, die ein Reinigen einer Aufnahmefläche des Karosseriebauteils als weiteren Stationsschritt vor einem Applizieren des Dichtungsprofils festlegt. Diese Ausgestaltungsvariante ist insbesondere vorgesehen, wenn die Applikationsvorrichtung robotergeführt ist. Die Reinigungseinheit ist dabei vorteilhafterweise derart an dem Grundkörper angeordnet, dass eine Reinigungsrolle der Reinigungseinheit nach außen weist und die Reinigungsrolle relativ zu der zu reinigenden Aufnahmefläche entlang bewegt wird. Diese Ausgestaltungsvariante kann aber insbesondere auch vorgesehen sein, wenn die Applikationsvorrichtung an einem stationären Träger fix angeordnet ist, wobei dann insbesondere das Bauteil entsprechend relativ zu der Reinigungseinheit verbracht wird, insbesondere mittels eines Roboterarms.

Bei einer vorteilhaften Ausgestaltungsvariante ist die Reinigungseinheit einer Anordnungsposition zugeordnet, die ein Reinigen einer Aufnahmefläche eines Karosseriebauteils als weiteren Stationsschritt während eines Applizierens des Dichtungsprofils festlegt. Vorteilhafterweise ermöglicht diese Ausgestaltung ein Reinigen der Aufnahmefläche ohne Taktzeitverlust. Ein Reinigen der Aufnahmefläche während eines Applizierens des Dichtungsprofils meint dabei, dass bei dieser Ausgestaltungsvariante das Reinigen eines ersten Abschnitts der Aufnahmefläche und das Aufbringen des Dichtungsprofils in einem zweiten, bereits zuvor gereinigten Abschnitt zeitgleich erfolgen, wobei insbesondere die Reinigungseinheit dem Anrollkopf örtlich vorgelagert ist. Es versteht sich, dass bei dieser Ausgestaltung insbesondere vorgesehen ist, dass bei einem Beginn einer Bearbeitung eines Karosseriebauteils zunächst für einen kurzen Abschnitt ein Reinigen ohne ein zeitgleiches Applizieren erfolgt und bei einem Ende einer Bearbeitung insbesondere für einen Abschnitt ein Applizieren ohne ein zeitgleiches Reinigen erfolgt.

Insbesondere ist vorgesehen, dass die Reinigungseinheit mehrere Reinigungskomponenten umfasst, die an verschiedenen dafür vorgegebenen Anordnungspositionen angeordnet sind. Als Reinigungskomponenten umfasst die Reinigungseinheit vorteilhafterweise die nachfolgenden Komponenten einzeln oder in möglichen Kombinationen: ein Reinigungsband, insbesondere ein Reinigungsvlies; eine Reinigungsrolle, über die das Reinigungsband zum Reinigen der Aufnahmefläche vorteilhaferweise geführt ist; eine Abwickelrolle, von der sauberes Reinigungsband bereitgestellt wird; eine Aufwickelrolle, von der zur Reinigung genutztes Reinigungsband aufgenommen wird; wenigstens eine Antriebseinheit, insbesondere wenigstens eine elektrische Antriebseinheit mit entsprechenden Anschlüssen und Leitungen, weiter insbesondere Antriebe für die Abwickelrolle und die Aufwickelrolle, weiter insbesondere einen Antrieb für einen seitlichen Verfahrhub der Reinigungsrolle; einen Schlitten, insbesondere einen Schlitten für einen seitlichen Verfahrhub der Reinigungsrolle; einen Andrückzylinder zum Andrücken der Reinigungsrolle; wenigstens eine Sensoreinheit; wenigstens ein Befestigungselement.

Weiter vorteilhaft umfasst die Applikationsvorrichtung wenigstens eine Sensoreinheit als wenigstens eine weitere Funktionseinheit, wobei die Sensoreinheit insbesondere ausgebildet ist, eine Ausführung eines Stationsschritts zu überwachen. Insbesondere sind mehrere Sensoreinheiten vorgesehen, die jeweils eine Funktionseinheit darstellen können. Es können aber auch Sensoreinheiten als Ergänzungskomponente zu einer Funktionseinheit vorgesehen sein. Die jeweilige Sensoreinheit ist vorteilhafterweise einer Anordnungsposition zugeordnet, die ein Überwachen einer Ausführung eines Stationsschritts als weiteren Stationsschritt bei einer Ausführung des zu überwachenden Stationsschritts festlegt, sodass insbesondere sofort reagiert werden kann, wenn ein Stationsschritt nicht wie vorgegeben ausgeführt wird. Alternativ oder zusätzlich ist vorgesehen, dass die jeweilige Sensoreinheit einer Anordnungsposition zugeordnet ist, die ein Überwachen einer Ausführung eines Stationsschritts als weiteren Stationsschritt nach einer Ausführung des zu überwachenden Stationsschritts festlegt. Insbesondere ist zumindest eine Auswerteeinheit vorgesehen, die die von den Sensoren der Sensoreinheiten erfassten Daten empfängt und auswertet. Dabei kann insbesondere eine zentrale Auswerteeinheit für sämtliche Sensoreinheiten vorgesehen sein. Insbesondere ist aber auch vorgesehen, dass zumindest einige der Sensoreinheiten jeweils eine Auswerteinheit umfassen.

Eine vorteilhafte Ausgestaltung sieht eine Kameraeinheit als Sensoreinheit vor, wobei die Kameraeinheit insbesondere mehrere Kameras umfassen kann. Insbesondere ist die Kamera eine Smart-Kamera. Der Kameraeinheit umfasst vorteilhafterweise eine Auswerteeinheit zur Auswertung der erfassten Bilddaten. Vorteilhafterweise ist die Kameraeinheit ausgebildet, die räumliche Lage des Bauteils, auf das das Dichtungsprofil aufgebracht werden soll, insbesondere die räumliche Lage des Bauteils in Relation zu der Applikationsvorrichtung, zu erkennen, insbesondere wenn das Bauteil in einem sogenannten Gehänge aufgenommen ist. Vorteilhafterweise ermöglicht die Kameraeinheit eine Bestimmung der Bauteillage im Raum beim Anrollen im Gehänge. Vorteilhafterweise liefert die Auswerteeinheit aus diesen Daten abgeleitete Korrekturwerte, die insbesondere an eine Robotersteuerung für den Roboter, an dem die Applikationsvorrichtung angeordnet ist, übertragen werden.

Gemäß einer weiteren vorteilhaften Ausgestaltung umfasst die Applikationsvorrichtung eine Sensoreinheit zur Überprüfung der Lage des an einem Karosseriebauteil applizierten Dichtungsprofils als Sensoreinheit. Insbesondere ist vorgesehen, dass diese Sensoreinheit einen Laser-Profil-Sensor umfasst. Weiter vorteilhaft umfasst diese Sensoreinheit eine Auswerteeinheit zum Verarbeiten der mittels des Sensors dieser Sensoreinheit erfassten Daten, insbesondere zum Speichern der Daten und/oder zum Auswerten der Daten und/oder zum Aufbereiten für eine Visualisierung der Daten. Insbesondere ist vorgesehen, dass mittels dieser Sensoreinheit während des Applizierens die Lage des auf die Aufnahmefläche des Karosseriebauteils aufgebrachten Dichtungsprofils relativ zu dem Karosseriebauteil erfasst und gespeichert werden kann. Vorteilhafterweise können mittels der Sensoreinheit die diesbezüglich erfassten Daten analysiert werden und vorzugsweise für eine Visualisierung mittels einer Bildwiedergabeeinrichtung, insbesondere mittels einer externen Bildwiedergabeeinrichtung, aufbereitet werden. Insbesondere erfolgt eine Wiedergabe der so aufbereiteten Daten auf einer Bildwiedergabeeinrichtung. Vorteilhafterweise ist diese Sensoreinheit zudem für eine statistische Auswertung der erfassten Daten ausgebildet, insbesondere für eine statistische Auswertung der erfassten Daten zur Prozessüberwachung.

Als eine weitere vorteilhafte Ausgestaltung ist vorgesehen, dass die Applikationsvorrichtung eine Sensoreinheit zur Überprüfung einer Andrückkraft als Sensoreinheit umfasst, insbesondere eine Sensoreinheit zur Überprüfung einer Andrückkraft während eines Aufbringens eines Dichtungsprofils an einer Aufnahmefläche eines Karosseriebauteils. Insbesondere ist vorgesehen, dass diese Sensoreinheit zur Überprüfung der Andrückkraft einer Andrückeinheit des Anrollkopfes, insbesondere einer Andrückrolle als Andrückeinheit, ausgebildet ist, wobei über die Andrückeinheit vorteilhafterweise das Dichtungsprofil geführt ist. Insbesondere ist vorgesehen, dass diese Sensoreinheit dazu einen Kraftmessbolzen umfasst. Weiter vorteilhaft umfasst diese Sensoreinheit eine Auswerteeinheit zum Verarbeiten der mittels des Sensors dieser Sensoreinheit erfassten Daten, insbesondere zum Speichern der Daten und/oder zum Auswerten der Daten und/oder zum Aufbereiten für eine Visualisierung der Daten. Insbesondere ist vorgesehen, dass mittels dieser Sensoreinheit während des Applizierens die Andrückkraft, mit dem das Dichtungsprofil auf die Aufnahmefläche des Karosseriebauteils aufgebracht wird, erfasst und gespeichert werden kann. Vorteilhafterweise können mittels der Sensoreinheit die diesbezüglich erfassten Daten analysiert werden und vorzugsweise für eine Visualisierung mittels einer Bildwiedergabeeinrichtung, insbesondere mittels einer externen Bildwiedergabeeinrichtung, aufbereitet werden. Insbesondere erfolgt eine Wiedergabe der so aufbereiteten Daten auf einer Bildwiedergabeeinrichtung. Vorteilhafterweise ist diese Sensoreinheit zudem für eine statistische Auswertung der erfassten Daten ausgebildet, insbesondere für eine statistische Auswertung der erfassten Daten zur Prozessüberwachung.

Eine weitere vorteilhafte Ausgestaltung sieht vor, dass die Applikationsvorrichtung eine Sensoreinheit zur Messung einer Dichtungsprofillänge, die ein an einer Aufnahmefläche eines Karosseriebauteils aufzubringendes Dichtungsprofil aufweisen soll, als Sensoreinheit umfasst. Da das Dichtungsprofil insbesondere als Endlosprofil vorgehalten wird, kann mittels dieser Sensoreinheit vorteilhafterweise die vorgegebene Länge des Dichtungsprofils für ein vorgegebenes Karosseriebauteil bestimmt werden und das Dichtungsprofil somit an der richtigen Stelle abgetrennt werden. Insbesondere ist vorgesehen, dass diese Sensoreinheit ein Messrad, insbesondere ein Zahn- und/oder ein Reibrad als Messrad, umfasst. Weiter vorteilhaft umfasst diese Sensoreinheit einen Drehwertgeber. Weiter vorteilhaft umfasst diese Sensoreinheit eine Auswerteinheit zum Verarbeiten der mittels des Sensors dieser Sensoreinheit erfassten Daten, insbesondere zum Speichern der Daten und/oder zum Auswerten der Daten und/oder zum Aufbereiten für eine Visualisierung der Daten. Insbesondere ist vorgesehen, dass mittels dieser Sensoreinheit während des Applizierens die Dichtungslänge des auf die Aufnahmefläche des Karosseriebauteils aufgebrachten Dichtungsprofils erfasst und gespeichert werden kann. Vorteilhafterweise können mittels der Sensoreinheit die diesbezüglich erfassten Daten analysiert werden und vorzugsweise für eine Visualisierung mittels einer Bildwiedergabeeinrichtung, insbesondere mittels einer externen Bildwiedergabeeinrichtung, aufbereitet werden. Insbesondere erfolgt eine Wiedergabe der so aufbereiteten Daten auf einer Bildwiedergabeeinrichtung. Vorteilhafterweise ist diese Sensoreinheit zudem für eine statistische Auswertung der erfassten Daten ausgebildet, insbesondere für eine statistische Auswertung der erfassten Daten zur Prozessüberwachung. Insbesondere kann mittels dieser Sensoreinheit so reproduzierbar ein Stauchungsverlauf zur Prozesskontrolle und Fehleranalyse dokumentiert werden. Zudem ist vorteilhafterweise durch diese Sensoreinheit eine permanente Füllstandskontrolle einer Bevorratungseinheit, insbesondere eines Dichtungsmagazins, das das Endlosdichtungsprofil bevorratet, realisiert. Zudem ist vorteilhafterweise eine Dokumentation des Verbrauchs des Dichtungsprofils durch diese Sensoreinheit realisiert.

Gemäß einer weiteren vorteilhaften Ausgestaltung ist vorgesehen, dass die Applikationsvorrichtung eine Sensoreinheit zur Messung einer Schwimmstellung einer Andrückeinheit der Applikationsvorrichtung als Sensoreinheit aufweist. Die Andrückeinheit ist dabei insbesondere eine Andrückrolle. Insbesondere ist vorgesehen, dass diese Sensoreinheit einen Laser-Distanz-Sensor umfasst. Vorteilhafterweise ist zudem an der Andrückeinheit ein Schaltblech angeordnet, auf das vorteilhafterweise der Laser des Laser-Distanz-Sensors ausgerichtet ist. Weiter vorteilhaft umfasst diese Sensoreinheit eine Auswerteinheit zum Verarbeiten der mittels des Sensors dieser Sensoreinheit erfassten Daten, insbesondere zum Speichern der Daten und/oder zum Auswerten der Daten und/oder zum Aufbereiten für eine Visualisierung der Daten. Insbesondere ist vorgesehen, dass mittels dieser Sensoreinheit während des Applizierens die Lage der Andrückeinheit erfasst und gespeichert werden kann. Vorteilhafterweise können mittels der Sensoreinheit die diesbezüglich erfassten Daten analysiert werden und vorzugsweise für eine Visualisierung mittels einer Bildwiedergabeeinrichtung, insbesondere mittels einer externen Bildwiedergabeeinrichtung, aufbereitet werden. Insbesondere erfolgt eine Wiedergabe der so aufbereiteten Daten auf einer Bildwiedergabeeinrichtung. Vorteilhafterweise ist diese Sensoreinheit zudem für eine statistische Auswertung der erfassten Daten ausgebildet, insbesondere für eine statistische Auswertung der erfassten Daten zur Prozessüberwachung. Insbesondere ist mittels dieser Sensoreinheit eine verbesserte Andrückkraftregelung realisiert. Weiter vorteilhaft lässt sich durch diese Sensoreinheit ein Erreichen der Endlagen der beweglich gelagerten Andrückeinheit verhindern. Vorteilhafterweise lassen sich so Schäden an der Applikationsvorrichtung und/oder an dem zu bearbeitenden Werkstück verhindern.

Eine weitere vorteilhafte Ausgestaltung der Applikationsvorrichtung sieht eine Trenneinheit als weitere Funktionseinheit vor, wobei die Trenneinheit ausgebildet ist, ein Dichtungsprofil zu zertrennen. Insbesondere umfasst die Trenneinheit zum Zertrennen des Dichtungsprofils wenigstens ein Schneidmesser. Die Trenneinheit ist vorteilhafterweise ausgebildet, ein Endlosdichtungsprofil jeweils auf die für ein vorbestimmtes Karosseriebauteil notwendige Dichtungsprofillänge zu kürzen, insbesondere zum Ende eines Applikationsvorgangs für ein Bauteil. Vorteilhafterweise wird die Trenneinheit von der Sensoreinheit zur Messung einer Dichtungsprofillänge gesteuert.

Insbesondere ist die Trenneinheit einer Anordnungsposition an dem Grundkörper der Applikationsvorrichtung zugeordnet, die ein Zertrennen eines Dichtungsprofils als weiteren Stationsschritt während eines Applizierens des Dichtungsprofils festlegt. Ein Zertrennen des Dichtungsprofils während eines Applizierens des Dichtungsprofils meint dabei, dass bei dieser Ausgestaltungsvariante das Zertrennen des Dichtungsprofils und das Aufbringen des Dichtungsprofils an zwei unterschiedlichen Abschnitten des Dichtungsprofils zeitgleich erfolgt, wobei insbesondere die Trenneinheit dem Anrollkopf örtlich nachgelagert ist. Ein abgetrenntes Ende eines Dichtungsprofils wird dabei zeitlich nachgelagert auf die Aufnahmefläche eines Karosseriebauteils aufgebracht.

Gemäß einer weiteren vorteilhaften Ausgestaltung weist der Grundkörper der Applikationsvorrichtung eine Anordnungsschnittstelle auf. Die Anordnungsschnittstelle ist dabei vorteilhafterweise ausgebildet, den Grundkörper, und somit insbesondere die Applikationsvorrichtung, an einem Stationsträger oder an einem beweglich ausgebildeten Roboterarm anzuordnen. Die Anordnungsschnittstelle macht die Applikationsvorrichtung somit vorteilhafterweise noch flexibler einsetzbar, nämlich insbesondere als stationäre Applikationsvorrichtung, wobei ein Karosseriebauteil zur Bearbeitung an der Applikationsvorrichtung in geeigneter Weise entlanggeführt wird, und insbesondere als mobile, robotergeführte Applikationsvorrichtung, die an einem Karosseriebauteil zur Bearbeitung in geeigneter Weise entlanggeführt wird.

Insbesondere ist dabei gemäß einer Ausgestaltungsvariante vorgesehen, dass der Grundkörper der Applikationsvorrichtung über die Anordnungsschnittstelle an einem Stationsträger angeordnet ist. Als Anordnung an einem Stationsträger ist insbesondere eine Aufständerung der Applikationsvorrichtung vorgesehen, sodass der Anrollkopf der Applikationsvorrichtung insbesondere ein aufgeständerter Anrollkopf ist. Weiter vorteilhaft ist gemäß einer weiteren Ausgestaltungsvariante vorgesehen, dass der Grundkörper der Applikationsvorrichtung über die Anordnungsschnittstelle an einem beweglich ausgebildeten Roboterarm angeordnet ist. Durch die Anordnung an einem beweglich ausgebildeten Roboterarm ist die Applikationsvorrichtung vorteilhafterweise robotergeführt und somit insbesondere auch der Anrollkopf der Applikationsvorrichtung ein robotergeführter Anrollkopf.

Weiter vorteilhaft ist vorgesehen, dass der Grundkörper der Applikationsvorrichtung Kabelführungen, insbesondere Ein- und/oder Austrittsöffnungen, aufweist, insbesondere Kabelführungen für Kabel für die wenigstens eine weitere Funktionseinheit. Vorteilhafterweise ist der Aufbau der Applikationsvorrichtung dadurch weiter vereinfacht und somit kostengünstig. Insbesondere ist vorgesehen, dass Anordnungspositionen und/oder Kabelführungen für eine bestimmte Funktionseinheit an dem Grundkörper besonders gekennzeichnet sind, insbesondere farblich gekennzeichnet sind. Vorteilhafterweise ist hierdurch die Zuordnung des jeweiligen Funktionsmoduls zu der jeweiligen Anordnungsposition vereinfacht. Alternativ oder zusätzlich ist vorgesehen, dass Anordnungsstellen von Funktionskomponenten eines Funktionsmoduls sich von den Anordnungsstellen von Funktionskomponenten eines anderen Funktionsmoduls unterscheiden, sodass vorteilhafterweise technisch sichergestellt ist, dass die Funktionsmodule nur an dafür vorgesehenen Anordnungspositionen angeordnet werden können.

Der zur Lösung der obenstehend genannten Aufgabe des Weiteren vorgeschlagene modulare Baukasten für den Aufbau einer Applikationsvorrichtung umfasst eine Vielzahl von Modulen mit vorgegebenen Eigenschaften, wobei aus den Modulen eine Applikationsvorrichtung in unterschiedlichen Ausgestaltungsvarianten aufgebaut werden kann. Vorteilhafterweise ist dafür keine Anpassung der Module erforderlich. Insbesondere umfasst der Baukasten Basismodule, die immer für den Aufbau einer Applikationsvorrichtung zu verwenden sind, und Erweiterungsmodule, die optional für den Aufbau einer Applikationsvorrichtung zu verwenden sind. Die Basismodule umfassen vorteilhafterweise einen Grundkörper und einen Anrollkopf. Die Erweiterungsmodule umfassen vorteilhafterweise eine Bohreinheit, eine Reinigungseinheit, wenigstens eine Sensoreinheit und eine Trenneinheit. Insbesondere können auch weitere Basismodule und/oder weitere Erweiterungsmodule vorgesehen werden. Eine basierend auf dem modularen Baukasten aufgebaute Applikationsvorrichtung umfasst insofern immer die Grundmodule des Baukastens. Von den Erweiterungsmodulen kann eine basierend auf dem modularen Baukasten aufgebaute Applikationsvorrichtung eine je nach Anforderung angepasste Anzahl umfassen, wobei insbesondere auch keine Erweiterungsmodule oder ein Erweiterungsmodul oder sämtliche Erweiterungsmodule des Baukastens von der Applikationsvorrichtung umfasst sein können. Durch den modularen Aufbau ist vorteilhafterweise eine hohe Flexibilität realisiert, wobei der Aufwand und somit die Kosten für die Individualisierung vorteilhafterweise gering sind.

Insbesondere ist vorgesehen, dass die Basismodule und die Erweiterungsmodule für den Aufbau einer erfindungsgemäß ausgebildeten Applikationsvorrichtung ausgebildet sind, und sich somit insbesondere eine Applikationsvorrichtung aufbauen lässt, die die vorstehend beschriebenen Merkmale einzeln oder in einer Kombination aufweist. Insbesondere weist der Grundkörper des Baukastens die vorstehend beschriebenen Merkmale des Grundkörpers der erfindungsgemäß ausgebildeten Applikationsvorrichtung einzeln oder in einer Kombination auf. Die Erweiterungsmodule des Baukastens weisen vorteilhafterweise die vorstehend beschriebenen Merkmale der Funktionseinheiten beziehungsweise der Funktionsmodule der erfindungsgemäß ausgebildeten Applikationsvorrichtung einzeln oder in einer Kombination auf.

Weitere vorteilhafte Einzelheiten, Merkmale und Ausgestaltungsdetails der Erfindung werden im Zusammenhang mit den in den Figuren (Fig.: Figur) dargestellten Ausführungsbeispielen näher erläutert. Dabei zeigt:
- Fig. 1: in einer perspektivischen Darstellung ein Ausführungsbeispiel für eine erfindungsgemäß ausgebildete Applikationsvorrichtung;
- Fig. 2: in einer perspektivischen Darstellung ein weiteres Ausführungsbeispiel für eine erfindungsgemäß ausgebildete Applikationsvorrichtung;
- Fig. 3: in einer weiteren perspektivischen Darstellung ein Ausführungsbeispiel eines Grundkörpers für eine erfindungsgemäß ausgebildete Applikationsvorrichtung;
- Fig. 4a, b: in perspektivischer Darstellung ein Ausführungsbeispiel für eine Bohreinheit als Funktionsmodul;
- Fig. 5a, b: in perspektivischer Darstellung und einer Seitenansicht ein weiteres Ausführungsbeispiel für eine Bohreinheit als Funktionsmodul;
- Fig. 6a, b: in perspektivischer Darstellung ein Ausführungsbeispiel für eine Reinigungseinheit als Funktionsmodul;
- Fig. 7a, b: in perspektivischer Darstellung ein Ausführungsbeispiel für eine Sensoreinheit zur Überprüfung einer Lage eines Karosseriebauteils im Raum als Funktionsmodul;
- Fig. 8a, b: in perspektivischer Darstellung ein Ausführungsbeispiel für eine Sensoreinheit zur Überprüfung der Lage des an einem Karosseriebauteil applizierten Dichtungsprofils als Funktionsmodul;
- Fig. 9a, b: in perspektivischer Darstellung ein Ausführungsbeispiel für eine Sensoreinheit zur Überprüfung einer Andrückkraft als Funktionsmodul;
- Fig. 10a, b: in perspektivischer Darstellung ein Ausführungsbeispiel für eine Sensoreinheit zur Messung einer Dichtungsprofillänge als Funktionsmodul;
- Fig. 11a, b: in perspektivischer Darstellung ein Ausführungsbeispiel für eine Sensoreinheit zur Messung einer Schwimmstellung einer Andrückeinheit als Funktionsmodul;
- Fig. 12: in einer perspektivischen Darstellung ein weiteres Ausführungsbeispiel für eine erfindungsgemäß ausgebildete Applikationsvorrichtung mit einem beweglich ausgebildeten Roboterarm;
- Fig. 13: in einer perspektivischen Darstellung ein weiteres Ausführungsbeispiel für eine erfindungsgemäß ausgebildete Applikationsvorrichtung mit einer stationär angeordneten Aufständerung;
- Fig. 14: in einer perspektivischen Darstellung ein weiteres Ausführungsbeispiel für eine erfindungsgemäß ausgebildete Applikationsvorrichtung mit von dem Grundkörper umfasster Anordnungsschnittstelle;
- Fig. 15: in einer perspektivischen Darstellung ein Ausführungsbeispiel für einen Roboterarm mit einem Gegenpart zur Verbindung mit der Anordnungsschnittstelle einer erfindungsgemäß ausgebildeten Applikationsvorrichtung; und
- Fig. 16: in einer perspektivischen Darstellung ein Ausführungsbeispiel für eine stationäre Aufständerung mit einem Gegenpart zur Verbindung mit der Anordnungsschnittstelle einer erfindungsgemäß ausgebildeten Applikationsvorrichtung.

In den verschiedenen Figuren sind gleiche Teile in der Regel mit den gleichen Bezugszeichen versehen und werden daher mitunter auch jeweils nur im Zusammenhang mit einer der Figuren erläutert.

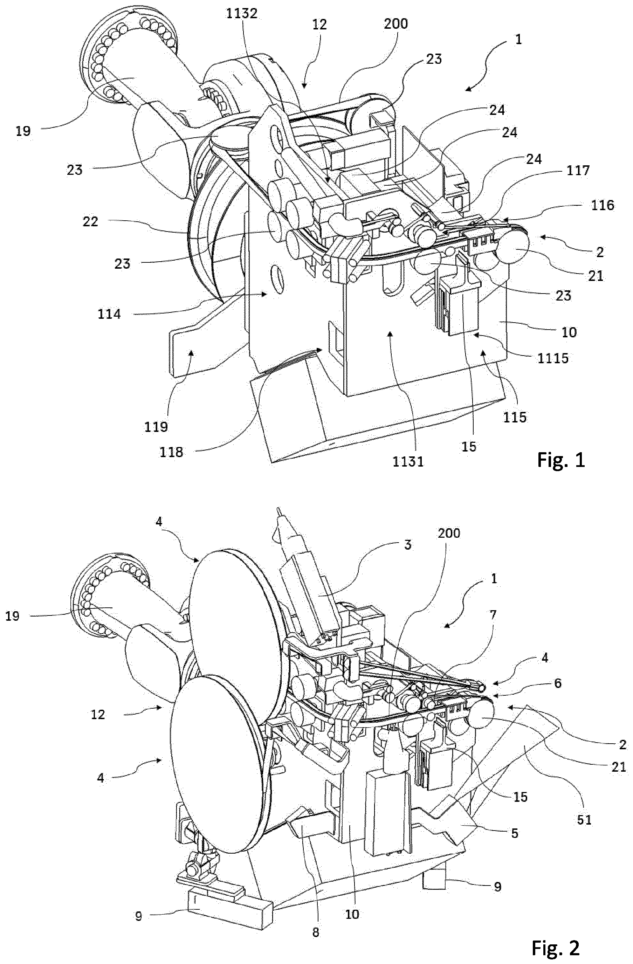

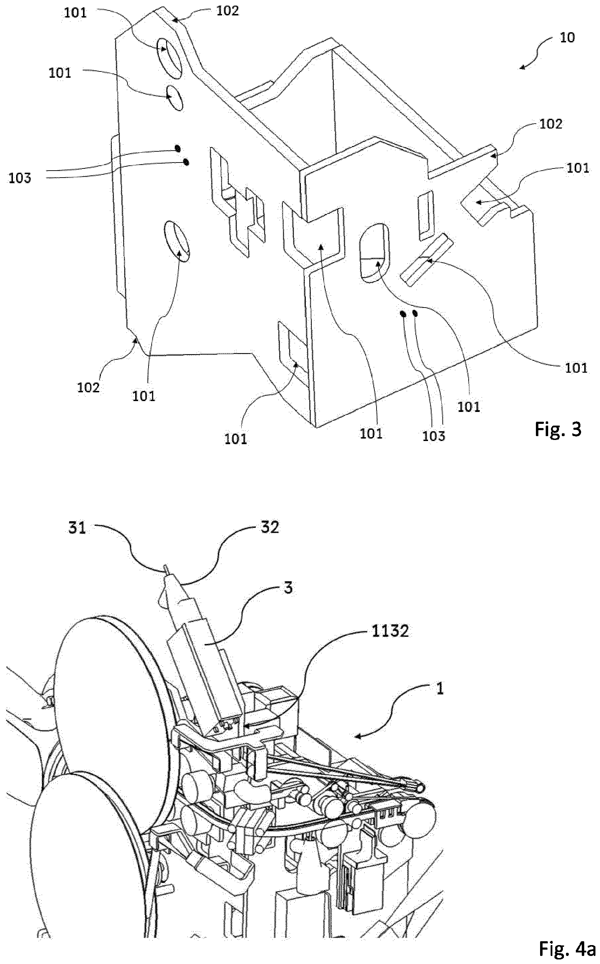

In Fig. 1 ist ein Ausführungsbeispiel für eine erfindungsgemäß ausgebildete Applikationsvorrichtung 1 dargestellt, die ausgebildet ist, ein Dichtungsprofil 200 auf ein Karosseriebauteil zu applizieren. Die Applikationsvorrichtung 1 weist einen Grundkörper 10 auf, der insbesondere aus Aluminiumblech gebildet sein kann. Eine vorteilhafte Ausgestaltung eines Grundkörpers 10 für eine erfindungsgemäß ausgebildete Applikationsvorrichtung zeigt Fig. 3.

An dem Grundkörper 10 ist ein Anrollkopf 2 angeordnet, der zum Aufbringen des Dichtungsprofils 200 auf eine Aufnahmefläche eines Karosseriebauteils als einen ersten Stationsschritt ausgebildet ist. Der Anrollkopf 2 umfasst dabei eine Vielzahl von Komponenten, insbesondere eine Bevorratungseinheit 22, die das Dichtungsprofil 200 als Endlosprofil bereitstellt, diverse Rollen 23 zum Führen des Dichtungsprofils 200, Antriebseinheiten 24 zum Antreiben von Rollen 23 zum Fördern des Dichtungsprofils 200 und eine Andrückeinheit 21 mit der das Dichtungsprofil 200 an die Aufnahmefläche gedrückt wird.

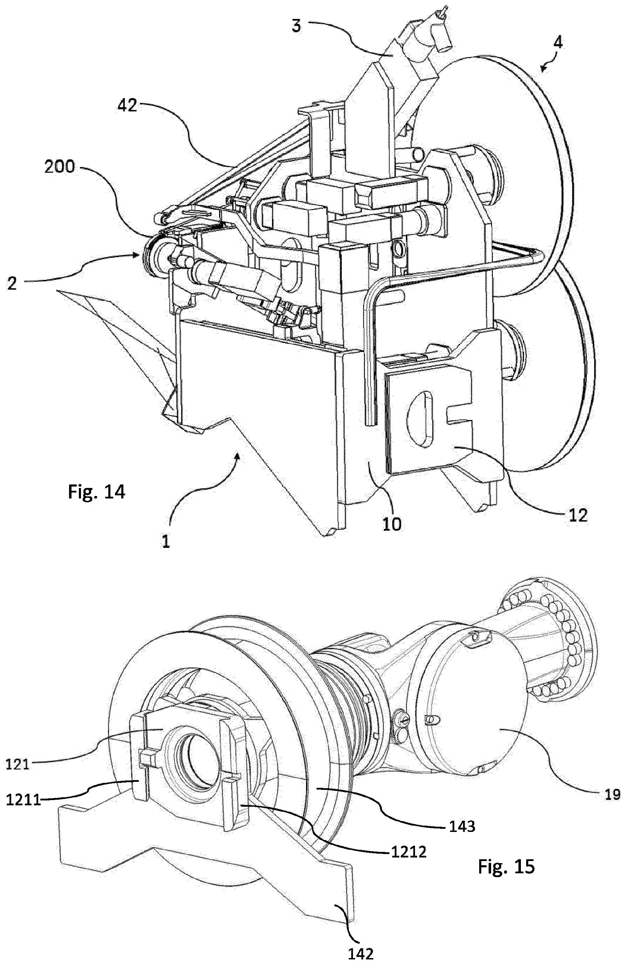

Der Grundkörper 10 umfasst des Weiteren eine Anordnungsschnittstelle 12, die bei der Darstellung in Fig. 1 dem Betrachter abgewandt ist. Eine vorteilhafte Ausgestaltung der Anordnungsschnittstelle 12 wird unter Bezugnahme auf Fig. 14 bis Fig. 16 näher erläutert. In dem in Fig. 1 dargestellten Ausführungsbeispiel ist der Grundkörper 10 über die Anordnungsschnittstelle 12 an einem beweglich ausgebildeten Roboterarm 19 angeordnet. Mittels des Roboterarms 19 kann der Anrollkopf 2 somit zum Applizieren des Dichtungsprofils 200 an einem Karosseriebauteil, das beispielsweise in einem Gehänge angeordnet sein kann, an der Aufnahmefläche des Karosseriebauteils entlanggeführt werden.

Darüber hinaus ist an dem Grundkörper 10 eine Trenneinheit 15 als weitere Funktionseinheit zusätzlich zu dem Anrollkopf 2 angeordnet. Die Trenneinheit 15 ist dabei als ein Funktionsmodul ausgebildet und umfasst eine Messerklinge, mit der das Dichtungsprofil 200 abgetrennt werden kann, sodass das Dichtungsprofil 200 genau die für das jeweilige Karosseriebauteil vorgesehene Länge aufweist. Insbesondere umfasst die Trenneinheit 15 eine Aktuatoreinheit, die für ein Zertrennen des Dichtungsprofils 200 ansteuerbar ist. Die Trenneinheit 15 ist in Bezug auf den Anrollkopf 2 derart an einer vorgegebenen Anordnungsposition 1115 des Grundkörpers 10 angeordnet, dass das Zertrennen des Dichtungsprofils 200 als weiterer Stationsschritt während eines Applizierens des Dichtungsprofils 200 festgelegt ist. Das heißt, während das Dichtungsprofil 200 mittels des Anrollkopfes 2 an der Aufnahmefläche des Karosseriebauteils aufgebracht wird, wird zu einem geeigneten Zeitpunkt das Dichtungsprofil 200 mittels der Trenneinheit 15 zerschnitten.

Der Grundkörper 10 der Applikationsvorrichtung 1 weist zudem eine Mehrzahl von weiteren vorbestimmten Anordnungspositionen 11 auf, wobei einer konkreten Anordnungsposition 11# aus der Mehrzahl der vorbestimmten Anordnungspositionen 11 jeweils einem weiteren Funktionsmodul, das ebenfalls an dem Grundkörper 10 angeordnet werden kann, zugeordnet ist. In diesem Ausführungsbeispiel weist der Grundkörper eine Anordnungsposition 1131 für eine Bohreinheit 3 auf, wobei diese Anordnungsposition 1131 ein Bohren von Löchern in das Dichtungsprofil 200 mittels der Bohreinheit 3 während des Applizierens des Dichtungsprofils 200 ermöglicht. Darüber hinaus weist der Grundkörper 10 aber auch eine alternative Anordnungsposition1132 für eine Bohreinheit 3 auf, wobei diese Anordnungsposition 1132 ein Bohren von Löchern mittels der Bohreinheit 3 in das bereits applizierte Dichtungsprofil 200, also ein Bohren von Löchern nach dem Applizieren des Dichtungsprofils 200, ermöglicht. Vorteilhafterweise lässt sich der Bohrer der Bohreinheit dabei unterschiedlich ausrichten, sodass vorteilhafterweise über die Bohreinheit 3 eine Feinpositionierung des Bohrers der Bohreinheit 3 ermöglicht ist. Vorteilhafterweise lassen sich so zudem unterschiedliche Anstellwinkel für die Löcher vorgeben.

Des Weiteren weist der Grundkörper 10 Anordnungspositionen 114 für eine Reinigungseinheit 4, mit der die Aufnahmefläche für das Dichtungsprofil 200 vor dem Aufbringen des Dichtungsprofils gereinigt werden kann, auf. Ferner umfasst der Grundkörper 10 Anordnungspositionen 119 für eine Sensoreinheit 9 zur Überprüfung einer Lage eines Karosseriebauteils im Raum, eine Anordnungsposition 115 für eine Sensoreinheit 5 zur Überprüfung der Lage des an einem Karosseriebauteil applizierten Dichtungsprofils 200, eine Anordnungsposition 116 für eine Sensoreinheit 6 zur Überprüfung einer Andrückkraft während eines Applizierens des Dichtungsprofils 200, eine Anordnungsposition 117 für eine Sensoreinheit 7 zur Messung einer Dichtungsprofillänge während des Applizierens des Dichtungsprofils 200 und eine Anordnungsposition 118 für eine Sensoreinheit 8 zur Messung einer Schwimmstellung der Andrückeinheit 21.

In Fig. 2 ist ein weiteres Ausführungsbeispiel für eine erfindungsgemäß ausgebildete Applikationsvorrichtung 1 dargestellt, die den gleichen Grundkörper 10, wie die Applikationsvorrichtung 1 gemäß Fig. 1 aufweist, wobei allerdings alle Anordnungspositionen 11 mit den entsprechenden Funktionsmodulen bestückt sind. So umfasst die Applikationsvorrichtung 1 gemäß Fig. 2 ergänzend zu der Applikationsvorrichtung 1 gemäß Fig. 1 ein Bohrmodul 3, ein Reinigungsmodul 4 mit an den entsprechenden Anordnungspositionen 114 angeordneten Komponenten, ein Sensormodul 5 zur Überprüfung der Lage des an einem Karosseriebauteil applizierten Dichtungsprofils 200, ein Sensormodul 6 zur Überprüfung einer Andrückkraft der Andrückeinheit 21, ein Sensormodul 7 zur Messung der Dichtungsprofillänge, ein Sensormodul 8 zur Messung der Schwimmstellung der Andrückeinheit 21 und ein Sensormodul 9 zur Überprüfung einer Lage eines Karosseriebauteils im Raum, wobei das Sensormodul 9 zwei Kameraeinheiten umfasst, die an den jeweiligen Anordnungspositionen 119 angeordnet sind.

Durch die jeweiligen Anordnungspositionen 11# der Funktionsmodule 3, 4, 5, 6, 7, 8, 9, 15 relativ zu einander ist vorteilhafterweise - zumindest in einem gewissen Umfang - eine Bearbeitungsreihenfolge des von dem jeweiligen Funktionsmodul auszuführenden Stationsschritts festgelegt, insbesondere in Bezug auf das Applizieren des Dichtungsprofils als Stationsschritt.

Ein Ausführungsbeispiel für den Grundkörper 10 der in Fig. 1 und Fig. 2 dargestellten Applikationsvorrichtungen 1 ist in Fig. 3 gezeigt. Der Grundkörper 10 umfasst in diesem Ausführungsbeispiel vier Metallplatten, insbesondere Aluminiumplatten, die rechtwinklig miteinander verbunden sind, sodass der Grundkörper 10 einen rechteckigen Umriss aufweist. Die Metallplatten des Grundkörpers 10 sind dabei unterschiedlich ausgestaltet, da diese für die Anordnung der jeweiligen Funktionsmodule angepasst sind. Zudem weisen die Metallplatten jeweils Aussparungen 101 und/oder Vorsprünge 102 und/oder Bohrungen 103 auf, die die Anordnungspositionen 11 bilden. Darüber hinaus kann der Grundkörper 10 insbesondere auch Bohrungen für Kabelführungen aufweisen.

Verschiedene als Funktionsmodule ausgebildete Funktionseinheiten 3, 4, 5, 6, 7, 8, 9, insbesondere für eine Verwendung mit der in Fig. 1 dargestellten Applikationsvorrichtung 1, werden unter Bezugnahme auf Fig. 4a bis Fig. 11b näher erläutert, wobei Fig. #a jeweils das jeweilige Funktionsmodul als Bestandteil einer erfindungsgemäß ausgebildeten Applikationsvorrichtung 1 zeigt und Fig. #b jeweils das jeweilige Funktionsmodul allein zeigt.

Die jeweiligen Funktionsmodule 3, 4, 5, 6, 7, 8, 9 können insbesondere auch Bestandteil eines modularen Baukastens für den Aufbau einer Applikationsvorrichtung 1 sein, wobei der modulare Baukasten eine Vielzahl von Modulen mit vorgegebenen Eigenschaften umfasst, aus denen die Applikationsvorrichtung 1 in unterschiedlichen Ausgestaltungsvarianten aufgebaut werden kann. Dieser modulare Baukasten umfasst dabei vorteilhafterweise den Grundkörper 10 und den Anrollkopf 2 als Basismodule, die für den Aufbau jeder Applikationsvorrichtung 1 verwendet werden. Die Funktionsmodule 3, 4, 5, 6, 7, 8, 9, 15 sind hingegen vorteilhafterweise Erweiterungsmodule, die optional einzeln oder in beliebiger Kombination für den Aufbau einer Applikationsvorrichtung verwendet werden können, insbesondere je nach Bedarf des Kunden. Bei der Verwendung von Endlosdichtungsprofilen ist insbesondere als Ausgestaltungsvariante vorgesehen, dass die Trenneinheit 15 abweichend kein Erweiterungsmodul, sondern ein Basismodul ist, das jede Applikationsvorrichtung 1 umfasst.

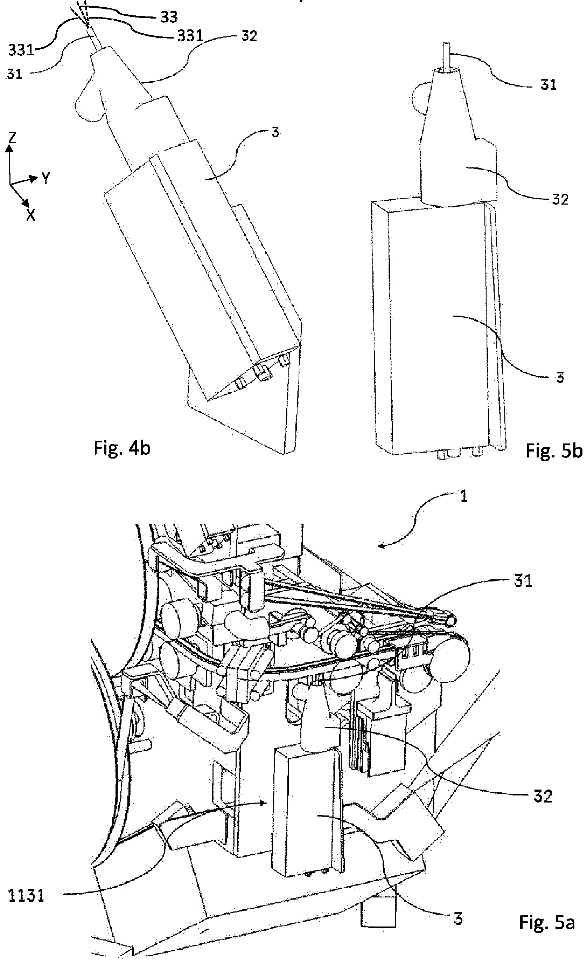

Fig. 4b zeigt ein Ausführungsbeispiel für eine Bohreinheit 3 als Funktionsmodul, wobei die Bohreinheit 3 einen mittels einer Antriebseinheit antreibbaren Bohrer 31 zum Bohren von Löchern in ein Dichtungsprofil 200 und eine Absaugglocke 32 umfasst. Mit der Absaugglocke 32 können vorteilhafterweise beim Bohren entstehende Materialreste abgesaugt werden. Die in das Dichtungsprofil gebohrten Löcher fungieren insbesondere als Wasserablauflöcher bei dem späteren Einsatz des Karosseriebauteils in einem Kraftfahrzeug. In Fig. 4b ist zudem die Bohrachse 33 des Bohrers 31 in der aktuellen Ausrichtung des Bohrers 31 symbolisch als gestrichelte Linie gezeigt. Diese Bohrachse 33 kann dabei mittels eine in Fig. 4b nicht explizit gezeigten Aktuatoreinheit verstellt werden, insbesondere bezüglich des Winkels des Bohrers 31. Fig. 4b zeigt beispielhaft zwei Bohrachsen 331 mit verstellter Ausrichtung. Insbesondere ist vorgesehen, dass die Bohrachse 33 des Bohrers 31 in eine erste Raumrichtung X und in eine zweite Raumrichtung Y und/oder in eine dritte Raumrichtung Z verstellbar ist.

Fig. 4a zeigt das an dem Grundkörper 10 einer Applikationsvorrichtung 1 an einer ersten Anordnungsposition 1132 angeordnete Bohrmodul 3, wobei diese Anordnungsposition 1132 ein Bohren des Dichtungsprofils 200 als weiteren Stationsschritt nach einem Applizieren des Dichtungsprofils 200 festlegt. Die Bohreinheit 3 umfasst vorteilhafterweise Aktuatoreinheiten, wobei der Bohrer 31 der Bohreinheit 3 mittels der Aktuatoreinheiten relativ zu dem Grundkörper 10 der Applikationsvorrichtung 1 verstellt werden kann, vorzugsweise in alle drei Raumrichtungen.

Fig. 5a zeigt dagegen ein weiteres Ausführungsbeispiel, bei dem das Bohrmodul 3 an dem Grundkörper 10 einer Applikationsvorrichtung 1 an einer zweiten Anordnungsposition 1131 angeordnet ist. Diese Anordnungsposition 1131 ermöglicht ein Bohren des Dichtungsprofils 200 als weiteren Stationsschritt während eines Applizierens des Dichtungsprofils 200. Das Bohrmodul 3 ist in Fig. 5b in einer Seitenansicht dargestellt.

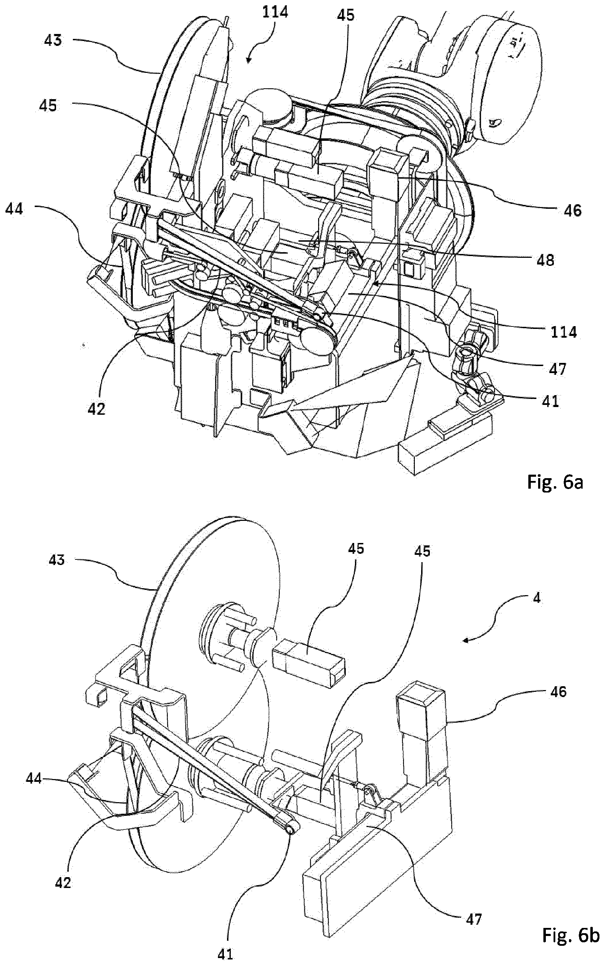

In Fig. 6b ist ein Ausführungsbeispiel für ein Reinigungsmodul 4 dargestellt, das zum Reinigen der Aufnahmefläche des Karosseriebauteils, an der das Dichtungsprofil 200 aufgebracht werden soll, ausgebildet ist. Bei der in Fig. 6a gezeigten Applikationsvorrichtung 1 ist das Reinigungsmodul 4 an einer sich auf verschiedene Bereiche des Grundkörpers 10 verteilende Anordnungsposition 114 angeordnet, oder, anders ausgedrückt, die Komponenten des Reinigungsmoduls 4 sind an mehreren Anordnungspositionen 114 an dem Grundkörper 10 angeordnet. Die Anordnungsposition 114 beziehungsweise die Anordnungspositionen 114 ermöglichen dabei ein Reinigen einer Aufnahmefläche des Karosseriebauteils als weiteren Stationsschritt mittels des Reinigungsmoduls 4 während eines Applizierens des Dichtungsprofils 200. Als Komponenten umfasst das Reinigungsmodul 4 in diesem Ausführungsbeispiel eine Reinigungsrolle 41, über die zum Reinigen der Aufnahmefläche ein Reinigungsband 42, insbesondere ein Reinigungsvlies, geführt wird. Das Reinigungsband 42 wird dann von einer Rolle 43, insbesondere einer Abwickelrolle, als sauberes Reinigungsband 42 bereitgestellt. Zum Reinigen bereits benutztes und verunreinigtes Reinigungsband 42 wird von einer Rolle 44, insbesondere einer Aufwickelrolle, aufgenommen. Die Rollen 43, 44 werden dabei von einer Antriebseinheit 45 angetrieben. Darüber hinaus umfasst das Reinigungsmodul 4 als weitere Komponenten einen Schlitten 47, mit dem ein seitlicher Verfahrhub der Reinigungsrolle 41 realisiert werden kann, wobei der Schlitten 47 von einer weiteren Antriebseinheit 46 angetrieben wird. Zudem umfasst das Reinigungsmodul 4 einen Andrückzylinder 48, mit dem die Reinigungsrolle 41 gegen die zu reinigende Aufnahmefläche gedrückt wird.

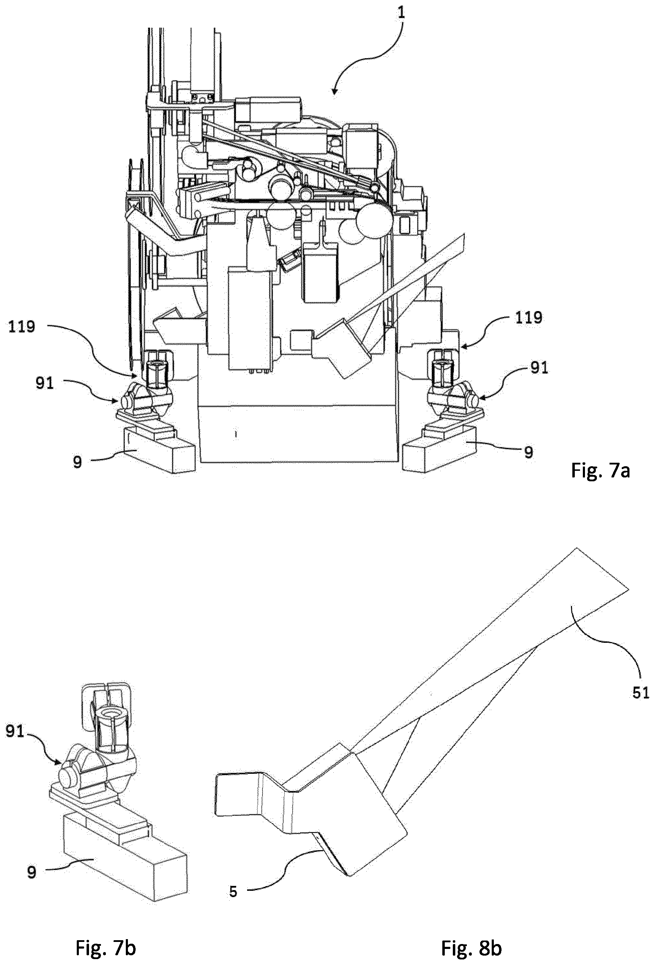

Fig. 7b zeigt ein Ausführungsbeispiel für eine Sensoreinheit 9 zur Überprüfung einer Lage eines Karosseriebauteils im Raum. Die Sensoreinheit 9 umfasst in diesem Ausführungsbeispiel zwei von verstellbaren Haltevorrichtungen 91 gehaltene Kameraeinheiten. In Fig. 7a ist dabei dargestellt, wie die Sensoreinheit 9 mit den Haltevorrichtungen 91 an den Anordnungspositionen 119 des Grundkörpers 10 einer Applikationsvorrichtung 1 angeordnet ist. Die Sensoreinheit 9 ist insbesondere dann vorteilhaft, wenn die Applikationsvorrichtung 1 von einem Roboter 19 für das Applizieren des Dichtungsprofils 200 geführt wird, wobei die Sensoreinheit 9 dabei vorteilhafterweise Daten bezüglich der Karosseriebauteilposition an eine Steuereinheit des Roboters 19 bereitstellt, sodass vorteilhafterweise ein Dichtungsprofil 200 mit hoher Präzision auf das Karosseriebauteil aufgebracht werden kann.

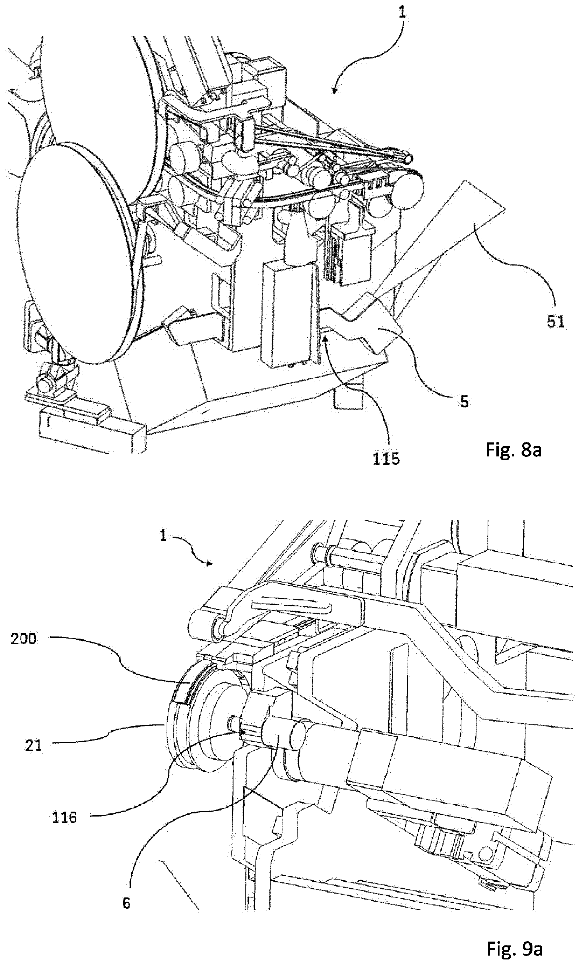

Fig. 8b zeigt ein Ausführungsbeispiel für eine Sensoreinheit 5 zur Überprüfung der Lage des an einem Karosseriebauteil applizierten Dichtungsprofils 200, wobei die Sensoreinheit 5 in diesem Ausführungsbeispiel als Laser-Profil-Sensor ausgebildet ist. In Fig. 8a ist eine Applikationsvorrichtung 1 mit der Sensoreinheit 5 dargestellt, wobei die Sensoreinheit an der dafür vorgesehenen Anordnungsposition 115 des Grundkörpers 10 der Applikationsvorrichtung 1 angeordnet ist. Die Anordnungsposition 115 sowie die Ausrichtung der Sensoreinheit 5 ist dabei so bestimmt, dass ein Erfassungsbereich 51 der Sensoreinheit 5 so ausgerichtet ist, dass während des Applizierens des Dichtungsprofils 200 auf dem Karosseriebauteil die Lage des Dichtungsprofils 200 relativ zu dem Karosseriebauteil erfasst und gespeichert werden kann. Die entsprechenden Daten können dann vorteilhafterweise direkt analysiert werden, sodass eine Prozessüberwachung mit nur geringem zeitlichen Versatz zum Applikationsvorgang realisiert ist. Insbesondere lässt sich so überwachen, ob das Dichtungsprofil 200 innerhalb zulässiger Toleranzen auf der Aufnahmefläche des Karosseriebauteils platziert ist. Sollte eine Abweichung der Lage des Dichtungsprofils 200 von vorgegebenen Sollwerten erkannt werden, wird vorteilhafterweise ein Hinweissignal generiert.

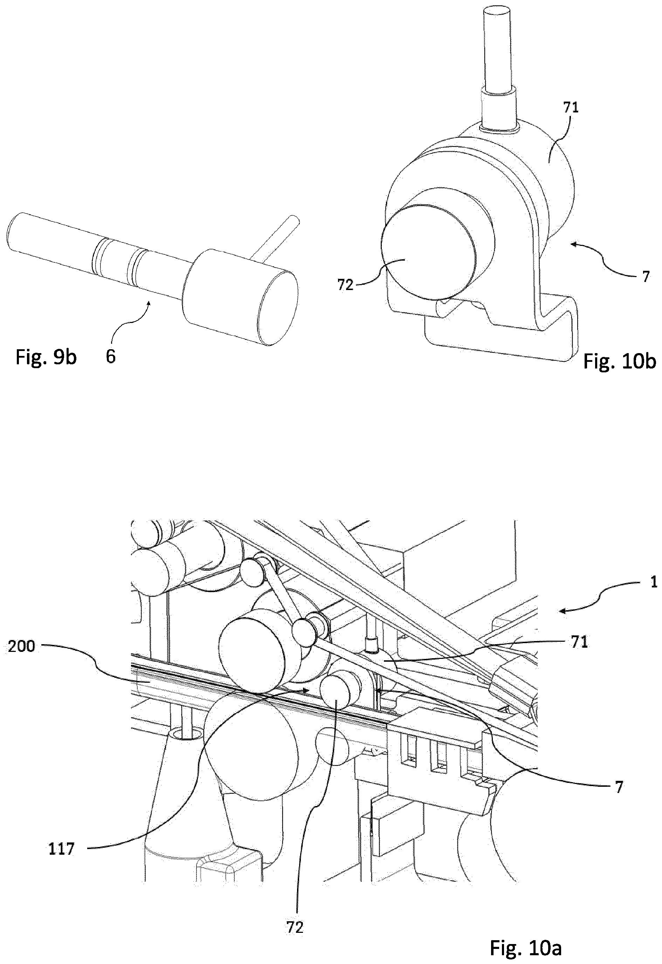

Fig. 9b zeigt ein Ausführungsbeispiel für eine Sensoreinheit 6 zur Überprüfung einer Andrückkraft, wobei die Sensoreinheit 6 in diesem Ausführungsbeispiel als Kraftmessbolzen ausgebildet ist. Durch die in Fig. 9a dargestellte Anordnungsposition 116 an dem Grundkörper 10 der Applikationsvorrichtung 1, derart, dass eine direkte Verbindung des Kraftmessbolzens mit der als Andrückrolle ausgebildeten Andrückeinheit 21 realisiert ist, kann die Andrückkraft der Andrückeinheit 21 und somit des Dichtungsprofils 200 während eines Aufbringens des Dichtungsprofils 200 an einer Aufnahmefläche eines Karosseriebauteils erfasst werden. Vorteilhafterweise lässt sich so ein reproduzierbar dokumentierter (Andrück-)Kraftverlauf erfassen, der insbesondere zur Prozesskontrolle und Fehleranalyse herangezogen werden kann.

Fig. 10b zeigt ein Ausführungsbeispiel für eine Sensoreinheit 7 zur Messung einer Länge des Dichtungsprofils 200, wobei damit insbesondere die Länge des Dichtungsprofils 200 bestimmt wird, die ein an einer Aufnahmefläche eines Karosseriebauteils aufzubringendes Dichtungsprofil 200 aufweisen soll. In diesem Ausführungsbeispiel umfasst die Sensoreinheit 7 dazu einen Drehwertgeber 71 und ein damit verbundenes Messrad 72. Das Messrad 72 wird dabei durch die Förderung des Dichtungsprofils 200 angetrieben, wobei die Umdrehungen des Messrades 72 von dem Drehwertgeber 71 erfasst werden. Fig. 10a zeigt die Anordnung der Sensoreinheit 7 innerhalb der Applikationsvorrichtung 1. Die Sensoreinheit 7 ist dabei an der für die Sensoreinheit 7 vorbestimmten Anordnungsposition 117 angeordnet. Die Anordnungsposition 117 ermöglicht es dabei, dass mit der Sensoreinheit 7 während des Applizierens des Dichtungsprofils 200 die Dichtungsprofillänge erfasst und gespeichert werden kann. Insbesondere ist damit eine permanente Füllstandskontrolle der Bevorratungseinheit 22 des Dichtungsprofils 200 realisierbar. Des Weiteren lässt sich der Dichtungsprofilverbrauch einfach dokumentieren.

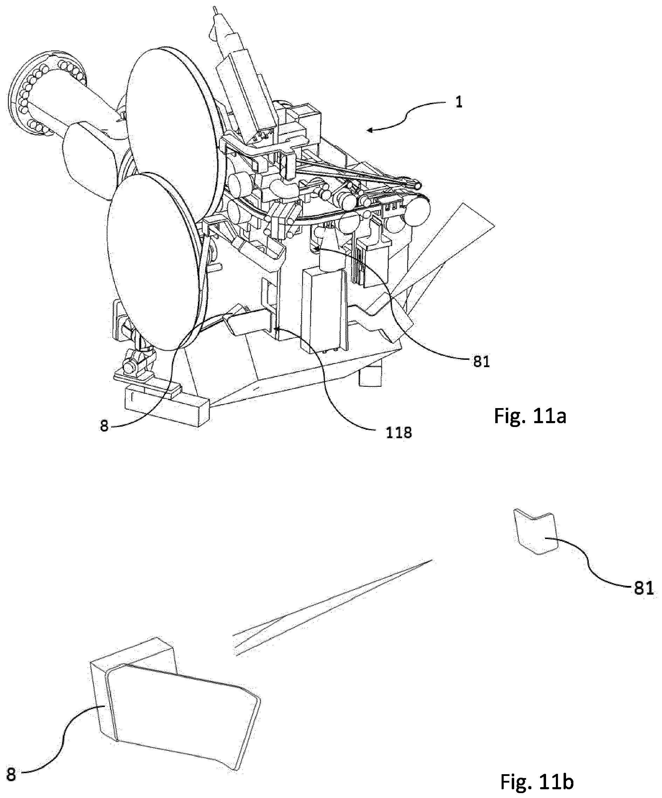

Fig. 11b zeigt ein Ausführungsbeispiel für eine Sensoreinheit 8 zur Messung einer Schwimmstellung der Andrückeinheit 21 der Applikationsvorrichtung 1. Die Sensoreinheit 8 ist dabei in diesem Ausführungsbeispiel als Laser-Distanzsensor ausgebildet, wobei die Sensoreinheit 8 in diesem Ausführungsbeispiel zudem ein Schaltblech 81 umfasst, auf das der Laser des Laser-Distanzsensors ausgerichtet wird. Das Schaltblech 81 ist dabei mit der Andrückeinheit 81 mechanisch gekoppelt, wobei über eine erfasste Positionsänderung des Schaltblechs 81 die Schwimmstellung der Andrückeinheit 21 gemessen werden kann. Die Anordnung des Schaltblechs 81 an einer Applikationsvorrichtung 1 ist in Fig. 11a gezeigt. Die Sensoreinheit 8 ist dabei an der dieser zugeordneten Anordnungsposition 118 des Grundkörpers 10 der Applikationsvorrichtung 1 angeordnet. Vorteilhafterweise lässt sich durch die Sensoreinheit 8 eine verbesserte Andrückkraftregulierung realisieren. Zudem können Schäden vermieden werden, indem ein Erreichen der Endlagen der Andrückeinheit 22 verhindert wird.

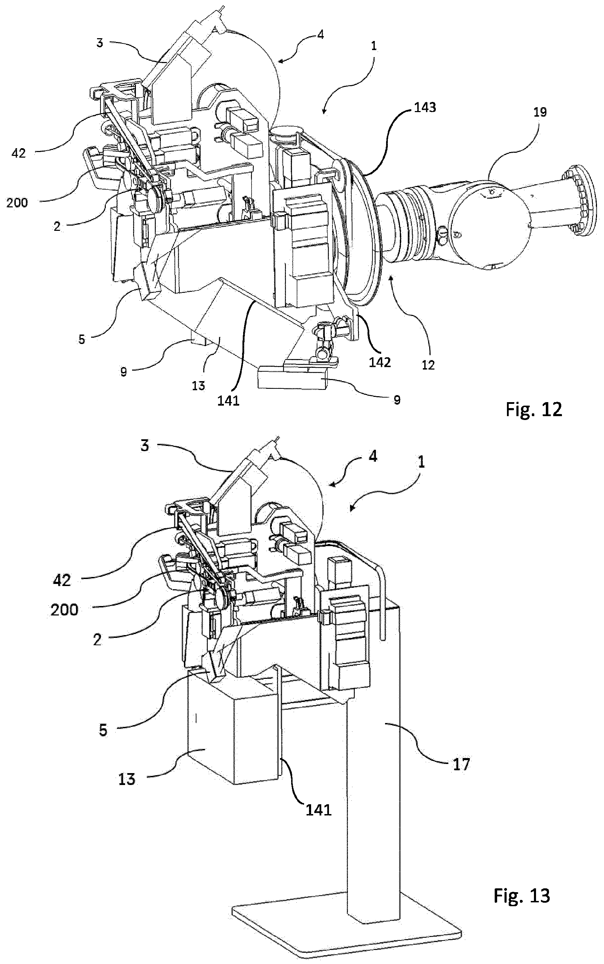

In Fig. 12 und Fig. 13 ist jeweils ein weiteres Ausführungsbeispiel für eine erfindungsgemäß ausgebildete Applikationsvorrichtung 1 dargestellt. Bei der Ausgestaltung gemäß Fig. 12 ist der Grundkörper 10 der Applikationsvorrichtung 1 über eine Anordnungsschnittstelle 12 an einem Roboterarm 19 angeordnet und bei der Ausgestaltung gemäß Fig. 13 ist der Grundkörper 10 der Applikationsvorrichtung 1 über eine Anordnungsschnittstelle 12 an einem Stationsträger 17 angeordnet, wobei der Stationsträger 17 als Aufständerung ausgebildet ist. Bei der Ausgestaltung gemäß Fig. 12 ist vorgesehen, dass das Karosseriebauteil, auf dem das Dichtungsprofil 200 appliziert werden soll, fix angeordnet ist, insbesondere in einem Gehänge, und der Anrollkopf 2 sowie die weiteren von der Applikationsvorrichtung 1 bereitgestellten Funktionseinheiten 3, 4, 5 zur Ausführung der jeweiligen Stationsschritte mittels des Roboterarms 19 an dem Karosseriebauteil entlanggeführt werden. Die relative Position des Karosseriebauteils im Raum zu der Applikationsvorrichtung 1 wird dabei mittels der Kameraeinheiten der Sensoreinheit 9 erfasst, und der Roboterarm 19 entsprechend gesteuert.

Dagegen ist die Applikationsvorrichtung 1 bei der Ausgestaltung gemäß Fig. 13 fix an dem Stationsträger angeordnet und ein zu bearbeitendes Karosseriebauteil wird an dem Anrollkopf 2 und den weiteren Funktionseinheiten 3, 4, 5 dieser Applikationsvorrichtung 1 entlanggeführt.

Aus diesen Unterschieden zwischen den Applikationsvorrichtungen 1 gemäß Fig. 12 und Fig. 13 resultieren jeweils gewisse Abweichungen in der Konfiguration. So sind die Schaltschränke 13 der Applikationsvorrichtungen 1 beispielsweise auf unterschiedliche Weise an dem Grundkörper 10 der jeweiligen Applikationsvorrichtung 1 angeordnet. An der Applikationsvorrichtung 1 gemäß Fig. 13 entfällt zudem die Sensoreinheit 9 zur Überprüfung einer Lage eines Karosseriebauteils im Raum, da diese Applikationsvorrichtung 1 fix angeordnet ist. Beide Applikationsvorrichtungen 1 basieren dennoch auf den gleichen Funktionsmodulen und können insbesondere aus dem gleichen modularen Baukasten aufgebaut werden.

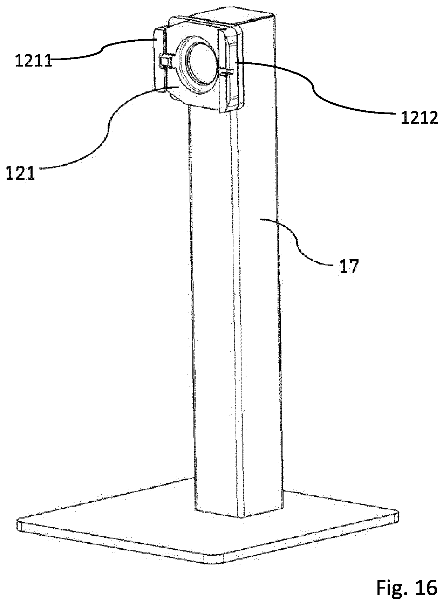

Fig. 14 zeigt eine Applikationsvorrichtung 1 zum Applizieren eines Dichtungsprofils 200 auf einem Karosseriebauteil mit einem Grundkörper 10 an dem mehrere Funktionsmodule 2, 3, 4 an vorbestimmten Anordnungspositionen angeordnet sind. Der Grundkörper 10 der Applikationsvorrichtung 1 weist zudem eine Anordnungsschnittstelle 12 auf, die ausgebildet ist, den Grundkörper 10 an einem beweglich ausgebildeten Roboterarm 19, insbesondere einem Roboterarm 19 wie in Fig. 15 gezeigt, oder an einem Stationsträger 17, insbesondere an einem Stationsträger wie in Fig. 16 gezeigt, anzuordnen. Fig. 14 zeigt dabei eine besonders vorteilhafte Ausgestaltung der Anordnungsschnittstelle 12. Die Anordnungsschnittstelle 12 ist dabei teilweise von dem Grundkörper 10 abgesetzt. Die Anordnungsschnittstelle 12 weist im Wesentlichen einen rechteckigen Umfang auf, wobei zu einer Seite der Anordnungsschnittstelle 12 hin die Kanten angeschrägt sind, wie in Fig. 14 gezeigt, insbesondere für eine vereinfachte Anordnung an einem Gegenpart 121 der Anordnungsschnittstelle 12. Zudem ist in diese Seite eine Aussparung eingebracht, wie ebenfalls in Fig. 14 gezeigt. Ein Gegenpart 121 der Anordnungsschnittstelle 12 ist vorteilhafterweise an dem Roboterarm 19 angeordnet, wie in Fig. 15 gezeigt. Alternativ dazu ist ein Gegenpart 121 der Anordnungsschnittstelle 12 vorteilhafterweise an dem Stationsträger 17 angeordnet, wie in Fig. 16 gezeigt, wobei in Fig. 16 eine stationäre Aufständerung als Stationsträger 17 vorgesehen ist. Der Gegenpart 121 ist komplementär zu der Anordnungsschnittstelle 12 ausgebildet, sodass die Anordnungsschnittstelle 12 mit dem Gegenpart 121 formschlüssig verbunden werden kann, wobei ein Vorsprung des Gegenparts in die Aussparung der Anordnungsschnittstelle 12 eingreift. Insbesondere ist vorgesehen, dass die Anordnungsschnittstelle 12 durch Befestigungsmittel, insbesondere Schrauben, an dem Gegenpart 121 weiter fixiert wird. Insbesondere können dafür auch bereits entsprechende Bohrungen und/oder Bolzen an der Anordnungsschnittstelle 12 und/oder an dem Gegenpart 121 vorgesehen sein, die in Fig. 14 bis Fig. 16 nicht dargestellt sind. Wie in Fig. 15 und in Fig. 16 dargestellt, kann der Gegenpart 121 der Anordnungsschnittstelle 12 ein Klemmbackenpaar aufweisen, von dem die Anordnungsschnittstelle 12 aufgenommen und fixiert wird. Das Klemmbackenpaar weist in diesem Ausführungsbeispiel eine verstellbare Klemmbacke 1211 und eine feststehende Klemmbacke 1212 auf. Wenn die Anordnungsschnittstelle 12 in das Klemmbackenpaar aufgenommen ist, wird die verstellbare Klemmbacke 1211 über eine in den Figuren nicht explizit dargestellte Schraube zu der feststehenden Klemmbacke 1212 hin bewegt und fixiert auf diese Weise die Anordnungsschnittstelle 12.

Die Applikationsvorrichtung 1, wie in Fig. 14 gezeigt, kann dann - ohne Änderungen an der in Fig. 14 gezeigten Applikationsvorrichtung 1 vornehmen zu müssen - über die Anordnungsschnittstelle 12 entweder mit dem Roboterarm 19 oder mit dem Stationsträger 17 verbunden werden. Vorteilhafterweise kann die Applikationsvorrichtung 1 an eine Anordnung an einem Roboterarm 19 oder an einem Stationsträger 17 mittels eines für eine Anordnung an einem Roboterarm 19 vorgesehenen ersten Anpassungsteilesets beziehungsweise mittels eines für eine Anordnung an einem Stationsträger 17 vorgesehenen zweiten Anpassungsteilesets erfolgen. Diese Anpassungsteile, die beispielsweise die Aufnahme 141 eines Schaltschranks 13 betreffen können, oder eine Aufnahme 142 für die Sensoreinheiten 9 zur Überprüfung einer Lage eines Karosseriebauteils im Raum und/oder eine Dichtungstrommel 143, in der das Dichtungsprofil bevorratet bereitgestellt wird, werden vorteilhafterweise ergänzend an die Applikationsvorrichtung 1 angeordnet, um die Applikationsvorrichtung 1 an die jeweilige Anordnungsweise noch besser anpassen zu können. Notwendig ist eine solche Anpassung aber nicht. So ist in Fig. 12 und Fig. 13 die jeweilige Aufnahme 141 für den Schaltschrank 13 nur anders ausgestaltet, um die jeweilige Handhabung zu verbessern. Notwendig ist die unterschiedliche Ausgestaltung der Aufnahme 141 des Schaltschranks nicht.

Vorteilhafterweise lassen sich mit den Anpassungsteilesets auf standardisierte Weise und vorteilhafterweise als separate Baugruppen Anpassungen an der Applikationsvorrichtung 1 für eine stationäre Verwendung beziehungsweise für eine robotergeführte Verwendung vornehmen. Die Applikationsvorrichtung 1, insbesondere der Grundkörper 10 der Applikationsvorrichtung 1, ist dabei vorteilhafterweise bereits zur Anordnung sowohl der Teile des ersten Anpassungsteilesets als auch der Teile des zweiten Anpassungsteilesets ausgebildet. Das bedeutet, dass insbesondere erforderliche Bohrungen, Aussparungen und/oder Halterungen für die Teile dieser Sets von der Applikationsvorrichtung 1 beziehungsweise dem Grundkörper 10 der Applikationsvorrichtung 1 bereits umfasst sind. Insbesondere ist vorgesehen, dass das erste Anpassungsteileset wenigstens eines der nachfolgend genannten Teile umfasst: stationäre Aufständerung; Schaltkastenanbindung; Dichtungstrommel. Weiter ist insbesondere vorgesehen, dass das zweite Anpassungsteileset wenigstens eines der nachfolgend genannten Teile umfasst: Roboteranbindung; Schaltkastenanbindung; Dichtungstrommel.

Die in den Figuren dargestellten und im Zusammenhang mit diesen erläuterten Ausführungsbeispiele dienen der Erläuterung der Erfindung und sind für diese nicht beschränkend.

### Bezugszeichenliste

- 1: Applikationsvorrichtung
- 2: Anrollkopf
- 21: Andrückeinheit
- 22: Bevorratungseinheit
- 23: Rolle zum Führen des Dichtungsprofils 200
- 24: Antriebseinheit zum Antreiben von Rollen (23)
- 3: Bohreinheit
- 31: Bohrer der Bohreinheit (3)
- 32: Absaugglocke der Bohreinheit (3)
- 33: Bohrachse
- 331: Bohrachse mit verstellter Ausrichtung
- 4: Reinigungseinheit
- 41: Reinigungsrolle
- 42: Reinigungsband
- 43: Rolle zur Bereitstellung von sauberem Reinigungsband (42)
- 44: Rolle zur Aufnahme von gebrauchtem Reinigungsband (42)
- 45: Antriebseinheit für Rolle
- 46: Antrieb für den Schlitten (47) für einen seitlichen Verfahrhub
- 47: Schlitten
- 48: Andrückzylinder für die Reinigungsrolle (41)
- 5: Sensoreinheit zur Überprüfung der Lage des an einem Karosseriebauteil applizierten Dichtungsprofils
- 51: Erfassungsbereich der Sensoreinheit (5)
- 6: Sensoreinheit zur Überprüfung einer Andrückkraft
- 7: Sensoreinheit zur Messung einer Dichtungsprofillänge
- 71: Drehwertgeber
- 72: Messrad
- 8: Sensoreinheit zur Messung einer Schwimmstellung einer Andrückeinheit
- 81: Schaltblech
- 9: Sensoreinheit zur Überprüfung einer Lage eines Karosseriebauteils im Raum
- 91: Haltevorrichtung
- 10: Grundkörper
- 101: Aussparung
- 102: Vorsprung
- 103: Bohrung
- 11#: Anordnungsposition ("#" steht für das Bezugszeichen eines jeweiligen Moduls)
- 1131: Anordnungsposition für eine Bohreinheit (3) zum Bohren während des Applizierens
- 1132: Anordnungsposition für eine Bohreinheit (3) zum Bohren nach dem Applizieren
- 114: Anordnungsposition für eine Reinigungseinheit (4)
- 115: Anordnungsposition für eine Sensoreinheit (5) zur Überprüfung der Lage des an einem Karosseriebauteil applizierten Dichtungsprofils
- 116: Anordnungsposition für eine Sensoreinheit (6) zur Überprüfung einer Andrückkraft
- 117: Anordnungsposition für eine Sensoreinheit (7) zur Messung einer Dichtungsprofillänge
- 118: Anordnungsposition für eine Sensoreinheit (8) zur Messung einer Schwimmstellung einer Andrückeinheit (21)
- 119: Anordnungsposition für eine Sensoreinheit (9) zur Überprüfung einer Lage eines Karosseriebauteils im Raum
- 1115: Anordnungsposition für eine Trenneinheit (15)
- 12: Anordnungsschnittstelle
- 121: Gegenpart der Anordnungsschnittstelle (12)
- 1211: verstellbare Klemmbacke
- 1212: feststehende Klemmbacke
- 13: Schaltschrank
- 141: Aufnahme für Schaltschrank
- 142: Aufnahme für Sensoreinheiten 9
- 143: Dichtungstrommel
- 15: Trenneinheit
- 17: Stationsträger
- 19: Roboterarm
- 200: Dichtungsprofil

## Patentansprüche

1. Applikationsvorrichtung (1) zum Applizieren eines Dichtungsprofils (200) auf einem Karosseriebauteil umfassend einen Anrollkopf (2), der zum Aufbringen des Dichtungsprofils (200) auf eine Aufnahmefläche des Karosseriebauteils als einen ersten Stationsschritt ausgebildet ist, und umfassend wenigstens eine weitere Funktionseinheit (3, 4, 5, 6, 7, 8, 9, 15), die jeweils zur Ausführung eines weiteren Stationsschritts, der im Zusammenhang mit dem Dichtungsprofil (200) und/oder dem Applizieren des Dichtungsprofils (200) steht, ausgebildet ist, **dadurch gekennzeichnet, dass** die wenigstens eine weitere Funktionseinheit (3, 4, 5, 6, 7, 8, 9, 15) jeweils als ein Funktionsmodul aus einer Menge von Funktionsmodulen ausgebildet ist, und dass die Applikationsvorrichtung (1) einen Grundkörper (10) aufweist, wobei der Grundkörper (10) den Anrollkopf (2) und eine Mehrzahl von vorbestimmten Anordnungspositionen (11) aufweist, wobei einer konkreten Anordnungsposition (11#) aus der Mehrzahl der vorbestimmten Anordnungspositionen (11) jeweils einem Funktionsmodul (3, 4, 5, 6, 7, 8, 9, 15) aus der Menge von Funktionsmodulen zur Anordnung an dem Grundkörper (10) zugeordnet ist, wobei jedes Funktionsmodul (3, 4, 5, 6, 7, 8, 9, 15) der Applikationsvorrichtung (1) an der dem jeweiligen Funktionsmodul (3, 4, 5, 6, 7, 8, 9, 15) zugeordneten Anordnungsposition (11#) angeordnet ist.

2. Applikationsvorrichtung (1) nach Anspruch 1, **dadurch gekennzeichnet, dass** die Anordnungspositionen (11) für die diesen Anordnungspositionen (11) zugeordneten Funktionsmodule (3, 4, 5, 6, 7, 8, 9, 15) derart vorbestimmt sind, dass eine Bearbeitungsreihenfolge des jeweiligen weiteren Stationsschritts, der durch das jeweilige zugeordnete Funktionsmodul (3, 4, 5, 6, 7, 8, 9, 15) ausgeführt werden kann, in Bezug auf den ersten Stationsschritt festgelegt ist.

3. Applikationsvorrichtung (1) nach Anspruch 1 oder Anspruch 2, **gekennzeichnet durch** eine Bohreinheit (3) als weitere Funktionseinheit, wobei die Bohreinheit (3) ausgebildet ist, Löcher in das Dichtungsprofil (200) zu bohren.

4. Applikationsvorrichtung (1) nach Anspruch 3, **dadurch gekennzeichnet, dass** die Bohreinheit (3) einer Anordnungsposition zugeordnet ist, die ein Bohren des Dichtungsprofils (200) als weiteren Stationsschritt vor einem Applizieren des Dichtungsprofils (200) festlegt; oder **dass** die Bohreinheit (3) einer Anordnungsposition (1131) zugeordnet ist, die ein Bohren des Dichtungsprofils (200) als weiteren Stationsschritt während eines Applizierens des Dichtungsprofils (200) festlegt; oder **dass** die Bohreinheit (3) einer Anordnungsposition (1132) zugeordnet ist, die ein Bohren des Dichtungsprofils (200) als weiteren Stationsschritt nach einem Applizieren des Dichtungsprofils (200) festlegt.

5. Applikationsvorrichtung (1) nach einem der vorstehenden Ansprüche, **gekennzeichnet durch** eine Reinigungseinheit (4) als weitere Funktionseinheit, wobei die Reinigungseinheit (4) ausgebildet ist, eine Aufnahmefläche des Karosseriebauteils zu reinigen.

6. Applikationsvorrichtung (1) nach Anspruch 5, **dadurch gekennzeichnet, dass** die Reinigungseinheit (4) einer Anordnungsposition (114) zugeordnet ist, die ein Reinigen einer Aufnahmefläche des Karosseriebauteils als weiteren Stationsschritt vor einem Applizieren des Dichtungsprofils (200) festlegt; oder **dass** die Reinigungseinheit (4) einer Anordnungsposition (114) zugeordnet ist, die ein Reinigen einer Aufnahmefläche des Karosseriebauteils als weiteren Stationsschritt während eines Applizierens des Dichtungsprofils (200) festlegt.

7. Applikationsvorrichtung (1) nach einem der vorstehenden Ansprüche, **gekennzeichnet durch** wenigstens eine Sensoreinheit (5, 6, 7, 8) als wenigstens eine weitere Funktionseinheit, wobei die Sensoreinheit (5, 6, 7, 8) ausgebildet ist, eine Ausführung eines Stationsschritts zu überwachen.

8. Applikationsvorrichtung (1) nach Anspruch 7, **dadurch gekennzeichnet, dass** die jeweilige Sensoreinheit (5, 6, 7, 8, 9) einer Anordnungsposition (115, 116, 117, 118, 119) zugeordnet ist, die ein Überwachen einer Ausführung eines Stationsschritts als weiteren Stationsschritt bei einer Ausführung des zu überwachenden Stationsschritts festlegt; und/oder **dass** die jeweilige Sensoreinheit (5, 6, 7, 8, 9) einer Anordnungsposition (115, 116, 117, 118, 119) zugeordnet ist, die ein Überwachen einer Ausführung eines Stationsschritts als weiteren Stationsschritt nach einer Ausführung des zu überwachenden Stationsschritts festlegt.

9. Applikationsvorrichtung (1) nach Anspruch 7 oder Anspruch 8, **gekennzeichnet durch**
eine Sensoreinheit (9) zur Überprüfung einer Lage eines Karosseriebauteils im Raum als Sensoreinheit; und/oder
eine Sensoreinheit (5) zur Überprüfung der Lage des an einem Karosseriebauteil applizierten Dichtungsprofils (200) als Sensoreinheit; und/oder
eine Sensoreinheit (6) zur Überprüfung einer Andrückkraft während eines Aufbringens eines Dichtungsprofils (200) an einer Aufnahmefläche eines Karosseriebauteils als Sensoreinheit; und/oder
eine Sensoreinheit (7) zur Messung einer Dichtungsprofillänge, die ein an einer Aufnahmefläche eines Karosseriebauteils aufzubringendes Dichtungsprofil (200) aufweisen soll, als Sensoreinheit; und/oder
eine Sensoreinheit (8) zur Messung einer Schwimmstellung einer Andrückeinheit (21) der Applikationsvorrichtung (1) als Sensoreinheit.

10. Applikationsvorrichtung (1) nach einem der vorstehenden Ansprüche, **gekennzeichnet durch** eine Trenneinheit (15) als weitere Funktionseinheit, wobei die Trenneinheit (15) ausgebildet ist, ein Dichtungsprofil (200) zu zertrennen.

11. Applikationsvorrichtung (1) nach Anspruch 10, **dadurch gekennzeichnet, dass** die Trenneinheit (15) einer Anordnungsposition (1115) zugeordnet ist, die ein Zertrennen eines Dichtungsprofils (200) als weiteren Stationsschritt während eines Applizierens des Dichtungsprofils (200) festlegt.

12. Applikationsvorrichtung (1) nach einem der vorstehenden Ansprüche, **dadurch gekennzeichnet, dass** der Grundkörper (10) eine Anordnungsschnittstelle (12) aufweist, die ausgebildet ist, den Grundkörper (10) an einem Stationsträger (17) und alternativ an einem beweglich ausgebildeten Roboterarm (19) anzuordnen.

13. Applikationsvorrichtung (1) nach Anspruch 12, **dadurch gekennzeichnet, dass** der Grundkörper (10) über die Anordnungsschnittstelle (12) an einem Stationsträger (17) angeordnet ist; oder **dass** der Grundkörper (10) über die Anordnungsschnittstelle (12) an einem beweglich ausgebildeten Roboterarm (19) angeordnet ist.

14. Modularer Baukasten für den Aufbau einer Applikationsvorrichtung (1), wobei der modulare Baukasten eine Vielzahl von Modulen (2, 3, 4, 5, 6, 7, 8, 9, 10, 15) mit vorgegebenen Eigenschaften umfasst, aus denen die Applikationsvorrichtung (1) in unterschiedlichen Ausgestaltungsvarianten aufgebaut werden kann, wobei der Baukasten Basismodule (2, 10), die immer für den Aufbau einer Applikationsvorrichtung zu verwenden sind, und Erweiterungsmodule (3, 4, 5, 6, 7, 8, 9, 15), die optional für den Aufbau einer Applikationsvorrichtung (1) zu verwenden sind, umfasst, wobei die Basismodule (2, 10) einen Grundkörper (10) und einen Anrollkopf (2) umfassen, und wobei die Erweiterungsmodule (3, 4, 5, 6, 7, 8, 9, 15) eine Bohreinheit (3), eine Reinigungseinheit (4), wenigstens eine Sensoreinheit (5, 6, 7, 8, 9) und eine Trenneinheit (15) umfassen.

15. Modularer Baukasten nach Anspruch 14, **dadurch gekennzeichnet, dass** die Basismodule (2, 10) und die Erweiterungsmodule (3, 4, 5, 6, 7, 8, 9, 15) für den Aufbau einer Applikationsvorrichtung (1) gemäß einem der Ansprüche 1 bis 13 ausgebildet sind.
